(19) Europäisches Patentamt
European Patent Office
Office européen des brevets

(11) **EP 4 089 473 A1**

(12) **EUROPEAN PATENT APPLICATION**

(43) Date of publication:
**16.11.2022 Bulletin 2022/46**

(51) International Patent Classification (IPC):
***G02C 7/02*** *(2006.01)*

(21) Application number: **21173073.4**

(52) Cooperative Patent Classification (CPC):
**G02C 7/022; G02B 27/0018; G02C 7/028;**
G02C 2202/24

(22) Date of filing: **10.05.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Carl Zeiss Vision International GmbH 73430 Aalen (DE)**

(72) Inventors:
• **JESTER, Philipp**
  **89520 Heidenheim an der Brenz (DE)**
• **HABTEGIORGIS, Selam Wondimu**
  **73431 Aalen (DE)**

(74) Representative: **PATERIS Patentanwälte PartmbB Danckelmannstraße 9 14059 Berlin (DE)**

(54) **SPECTACLE LENS DESIGN, SPECTACLE LENS KIT, METHOD OF MANUFACTURING A SPECTACLE LENS AND METHOD OF PROVIDING A SPECTACLE LENS DESIGN**

(57) A spectacle lens design for a spectacle lens (1, 11, 21, 31, 41, 51) to be positioned relative to the eye of a wearer according to a given as-worn position. The spectacle les design includes
- a clear zone (2, 12, 22, 32, 42, 52) which, when a spectacle lens (1, 11, 21, 31, 41, 51) manufactured according to the spectacle lens design is positioned according to the as-worn position, has a focal power that provides a focused image on the fovea; and
- a focusing zone (3, 13a, 13b, 23, 33, 43, 53) arranged adjacent to the clear zone (1, 11, 21, 31, 41, 51) where the focusing zone (3, 13a, 13b, 23, 33, 43, 53) includes focusing structures (4, 14, 24, 34, 44, 54) at a lens surface (5, 15) providing a focal power resulting in a myopic defocus, when a spectacle lens (1, 11, 21, 31, 41, 51) manufactured according to the spectacle lens design is positioned according to the as-worn position.

The lens surface (5, 15) is defined by a surface sag function, wherein the surface sag function is a continuous function and each of the focusing structures (4, 14, 24, 34, 44, 54) represents a second-order and/or higher-order approximation of a sphere.

In addition, a spectacle lens (1, 11, 21, 31, 41, 51), a method of manufacturing a corresponding spectacle lens (1, 11, 21, 31, 41, 51), and a method of providing a spectacle lens design for at least retarding myopia progression based on measured eye-data are provided.

Fig. 1

**(Cont. next page)**

Fig. 3

**Description**

FIELD OF THE INVENTION

The present invention relates to a spectacle lens design, to a spectacle lens to be positioned relative to the eye of a wearer according to a given as-worn position, and to a method of manufacturing such a spectacle lens. In addition, the invention relates to a method of providing a spectacle lens design for at least retarding myopia progression based on measured eye-data.

BACKGROUND ART

In many East Asian countries, myopia has reached epidemic proportions with some large urban centers reporting close to 100 % incidence of myopia among 18 - 19 year old (JUNG, S. K., LEE, J. H., KAKIZAKI, H., JEE, D. Prevalence of myopia and its association with body stature and educational level in 19-year-old male conscripts in Seoul, South Korea. Invest Ophthalmol Vis Sci. 2012 Aug 15;53(9):5579-83. doi: 10.1167/iovs.12-10106. PMID: 22836765). It has been estimated that there have been around 2 billion myopes worldwide in 2010 and some of the recent epidemiological modelling suggests that this figure will increase to 5 billion in 2050 (Holden, B. A., Fricke, T. R., Wilson, D. A. et al. Global Prevalence of Myopia and High Myopia and Temporal Trends from 2000 through 2050. Ophthalmology 2016, 123: 1036-1042). Furthermore, there is an increasing trend for juveniles to develop high myopia (defined as SER (spherical equivalent refraction) $\leq$ -5.00 D), which substantially increases the risk of eye diseases like cataract, glaucoma, retinal detachment and myopic maculopathy, all of which can cause irreversible vision loss (Wong T. Y., Ferreira A., Hughes R., et al. Epidemiology and disease burden of pathologic myo-pia and myopic choroidal neovascularization: an evidence-based systematic review. Am J Ophthalmol 2014; 157: 9-25). Epidemiological models predict a global increase of high myopia from around 300 million in 2010 to 1 billion in 2050 (Holden, B. A., Fricke, T. R., Wilson, D. A. et al. Global Prevalence of Myopia and High Myopia and Temporal Trends from 2000 through 2050. Ophthalmology 2016, 123: 1036-1042. This will inevitably lead to a very high cost to society in treating visual impairment and lost productivity.

The optical, visual and potential pathological effects of myopia and its consequent inconvenience and cost to the individual and community, makes it desirable to have effective strategies to slow the progress, or prevent or delay the onset of myopia, or limit the amount of myopia occurring in both children and young adults.

Until the turn of the millennium, the conventional approach for myopia treatment was under-correction by addressing only the on-axis or central field refractive state, as it is, e.g., explained in detail in WO 2007/ 092 853 A2.

Other optical methods employ bifocal or progressive aspheric lens spectacles or bifocal contact lenses as potential strategies for retarding the progression of myopia. For example, WO 99/ 66 366 A1 discloses the use of a progressive ophthalmic lens designed to reduce the rate of juvenile myopia progression. US 2003 / 0 058 407 A1 discloses a method for treating myopia progression in patients who also exhibit near point esophoria by selectively prescribing bifocal contact lenses. WO 2006/ 004 440 A2 discloses the use of bifocal contact lenses with various arrangements of vision correction area and myopic defocus area to counter progression of myopia.

A similar approach for controlling myopic progression is known from CooperVision® which sell contact lenses under the trademark MiSight® 1 day. The same approach is used by Hong Kong Polytechnic University's DISC contact lenses, the functionality of which is e.g. disclosed in WO 2006/ 034 652 A1. According to this document the contact lens includes a central optical zone having a primary optical power and at least one peripheral optical zone having a secondary optical power (i.e. a bifocal effect) to treat the progression of myopia. The idea behind this technology is to provide one focus in front and one focus behind the retina. However, studies on the efficacy of methods that employ bifocal devices generally show only limited efficacy.

In the case of bifocal or progressive spectacles, compliance of the wearer to always look through the near addition portion of the spectacles for near work cannot be guaranteed. And this is particularly so when dealing with children.

WO 2005/ 055 891 A1 and WO 2007/ 092 853 A2 disclose that peripheral retinal image (i.e. peripheral vision) plays a major role in determining overall eye length, and is an effective stimulus that promotes peripheral and total eye growth that results in axial elongation, an overall increase in eye size and myopia.

In a key experiment described in WO 2005/ 055 891 A1, primates were reared with annular diffusing lenses placed in front of the eye. The annular diffusing lenses allowed light rays from on axis, central field objects to reach the eye unobstructed. The same annular diffusing lenses scattered or diffused light rays from off-axis, peripheral field objects. This scattering induced form deprivation only to off-axis visual objects in the peripheral field, while maintaining clear vision for the central field. It is known to vision scientist working on myopia development that form deprivation applied to the entire visual field (or central field) of the eye induces axial growth leading to myopia. In the experiment disclosed in WO 2005/ 055 891 A1, involving form deprivation to only the peripheral field, the eye also developed myopia due to axial elongation and eye growth.

In an extension to the experiment described in WO 2005/ 055 891 A1, the annular diffusing lenses were removed from some eyes following development of substantial amounts of myopia. When the annular diffusing lenses were removed, the amount of myopia in the primates decreased.

Further, in a parallel extension to the experiment, for other eyes, in addition to removal of the annular diffusing lenses following development of substantial amounts of myopia, central vision of the primate's eye was eliminated, by using an Argon (blue-green) laser to ablate the macular portion of the retina by photocoagulation, essentially blinding central vision while sparing peripheral vision. Even when on-axis central, foveal vision was interrupted in this manner, the decrease in myopia remained similar to when central vision was not disrupted.

Based on learning from these experiments that demonstrate that the peripheral retinal image (i.e. peripheral vision) plays a major role in determining overall eye length, and is an effective stimulus that promotes peripheral and total eye growth that results in axial elongation, an overall increase in eye size and myopia, WO 2005/ 055 891 A1 discloses a method of abating, retarding or eliminating the progression of myopia in an individual by controlling off-axis aberrations through manipulating the curvature of field of a visual image in a predetermined fashion and ultimately altering, reducing or eliminating eye axial elongation. In this method by which myopia progression may be retarded (and in many cases, halted or reversed) an optical device having a predetermined off-axis aberration-controlled design that abates, retards or eliminates eye growth while simultaneously providing clear central imaging is used.

The authors of WO 2005/ 055 891 A1 describe a method and apparatus for controlling optical aberrations to alter relative curvature of field by providing ocular apparatuses, systems and methods comprising a predetermined corrective factor to produce at least one substantially corrective stimulus for repositioning peripheral, off-axis, focal points relative to the central, on-axis or axial focal point while maintaining the positioning of the central, on-axis or axial focal point on the retina. The method and apparatuses are used to provide continuous, useful clear visual images while simultaneously retarding or abating the progression of myopia.

The authors propose e.g. an optical device, such as spectacles, contact lenses, artificial corneal devices such as on-lays and in-lays, corneal implants, anterior chamber lenses or intraocular lenses, or employing interventions, such as methods for corneal and epithelial remodeling and sculpting including orthokeratology and refractive surgery such as epikeratophakia, thermokeratoplasty, LASIK, LASEK and PRK that can provide a resultant negative relative curvature of field at the retina, and that in addition, in order to continue to provide good central visual acuity for critical visual tasks, the optical device or optical intervention should ensure good focus of central field image to the retina.

The documents WO 2005/ 055 891 A1 and WO 2007/ 092 853 A2 disclose a suitable spectacle lens. This spectacle lens is designed such that it would generate a negative relative curvature of field on the eye. According to the authors this arrangement is advantageous over conventional under-correction approaches as the central, on-axis image point is focused sharply to the fovea enabling good visual acuity. The peripheral image points, due to the negative relative curvature of field, are focused more anteriorly, or in front (i.e. in the direction against the direction of light in the eye) of the retina. This has the effect of producing a relative under-correction to the peripheral field, which, from the experiment results, would control eye growth and axial elongation. That is, due to the more anterior location of the off-axis, peripheral field image points, stimulus to axial growth is significantly reduced, eliminated or reversed in the eye, leading to reduction or elimination of myopia development or reduction and even reversal of myopia progression.

The first versions of spectacle lenses following this approach are developed by the Carl Zeiss Vision group in cooperation with the Brian Holden Vision Institute. One of the first spectacle lens designs following this approach is e.g. disclosed in WO 2007/ 041 796 A1.

Another spectacle lens design being launched under the trademark Myovision is e.g. disclosed in WO 2009/ 052 570 A1.

According to Prof. Schäffel in a presentation "Individualisierte Myopiebehandlung bei Kindern - Prof. Dr. Frank Schaeffel und Dr. Hakan Kaymak (Innovationssymposium 2019)" held on January 19, 2019 in Düsseldorf Essilor markets a similar design under the trademark Myopilux.

Further lens designs following the theory described in WO 2005/ 055 891 A1 are disclosed in WO 2009/ 129 528 A1 assigned inter alia to Novartis AG. These lens designs being characterized by a peripheral optical zone surrounding a central zone. Said peripheral zone includes an incident angle with respect to the optical axis of about 30 degrees and has a positive peripheral refractive power relative to the refractive power of the central zone of that lens to thereby provide myopic peripheral defocus. Despite WO 2009/ 129 528 A1 indicates the suitability of said lens for spectacles, in particular, the above co-applicant points to a design targeted for a contact lens.

Well known due to market success are in particular Coopervision's contact lenses, the principle of which is e.g. disclosed in WO 2010/ 129 465 A1. The ophthalmic lens disclosed therein comprises or includes a vision correction region and a myopic defocus region. In an example disclosed in WO 2010/129 465 A1 the ophthalmic lens is a contact lens comprising an annular zone with three subrings which surrounds a central zone. While two of the sub-rings belong to the myopic defocus region the third sub-ring, which separates the two sub-rings belonging to the myopic defocus region, belongs to the vision correction region, together with the central zone. The vision correction region and the myopic defocus region define an optic zone of the contact lens. The optic zone is circumscribed by a non-optical peripheral zone which extends from an outer perimeter of the optic zone to a peripheral edge zone of the contact lens. The optic zone comprises or consists of a plurality of concentric rings circumscribing a central circular zone.

The central zone of the contact lens is circular or substantially circular and may have a distance optical power and a diameter greater than 2.0 mm. The diameter of the central zone can be determined by measuring a straight line through the optic axis to opposing perimeter boundaries of the central zone in a two-dimensional front plan view of the contact lens.

Similar designs allegedly being suitable for contact lenses and spectacle lenses are also disclosed in US 2016 / 0 054 588 A1, US 2017 / 0 276 961 A1 and US 2019 / 0 227 342 A1 assigned to Johnson & Johnson.

In particular, US 2019 / 0 227 342 A1 discloses an ophthalmic lens having a center zone with a negative power for myopic vision correction; and at least one treatment zone surrounding the center zone. The at least one treatment zone having a power profile comprising an ADD power. The at least one treatment zone has a surface shape composing a portion of a generally toroidal shape. The at least one treatment zone is arranged as to form a continuous surface with the center zone. As an example, the portion of the toroidal shape may be derived from a torus (e.g., spheroidal torus), wherein a slice through the surface of the spheroidal torus to generate the portion of the toroidal shape comprises a right circular conical surface with the principal axis of the cone coincident with the axis of rotation about which the torus is generated. The treatment zone may be configured to result in a ring focus. A position of the focal ring may be dependent upon the optical power of the treatment zone.

Optical function of a radially concentric multizone ophthalmic lens that serves at least a spherical correction purpose according to US 2019 / 0 227 342 A1 is most generally derived from a front and back surface. One of these surfaces may be spheroidal or ellipsoidal in nature. The other surface typically has a spheroidal or ellipsoidal cap and then one or more curved portions, each of which is the surface of a spheroidal or ellipsoidal frustum ("zone") that is symmetrically arranged so as to form a continuous surface. The zones may be radially concentric and optically coaxial about a common axis.

Each frustum may be created by sectioning a spheroid or ellipsoid of appropriate size and shape to achieve the desired optical power, perpendicular to the principal axis of such spheroid or ellipsoid. In some cases, a transitional region (e.g., an optically dysfunctional) may be required to allow the individual zones to form a continuous surface. For myopia treatment, some of the zones will generally produce a more positive wavefront derivative than the zone or zones devoted to correct distance vision, where the wavefront derivative is taken with respect to the radial distance from the principal axis (dW/dr). Rays of light parallel to the common axis and passing through the zones will come to a principal focus for each zone, and these foci will be located on the common axis for rotationally symmetric zones. When the ophthalmic lens is used to correct vision and where one or more of the zones have principal foci of different focal length, the image formed at the retina of the eye may come along with ghosting or haloes, leading to degradation of vision.

US 2019 /0 227 342 A1 discloses embodiments having a zone (or replacing a designed zone of the lens) with a surface shape derived from a toroidal shape (e.g., spheroidal torus) or, in the case of replacing multiple zones, from one or more tori. As an example, the portion of the toroidal shape to be utilized may be derived from a torus (e.g., a spheroidal torus), after making a slice in the shape of the surface of a right circular cone through the surface of the spheroidal torus wherein the principal axis of the cone is coincident with the axis of rotation about which the torus is generated. The portion of the torus forming part of the lens surface is so arranged as to form a continuous surface with other zones of the lens or being joined by an optically dysfunctional, transition region to allow the individual zones to form a continuous surface. Other slices (conical or otherwise) than outlined in the document are indicated as being suitable to be used.

Hong Kong Polytechnic University and Hoya recently disclosed a different kind of spectacle lenses following the general approach described in WO 2005/ 055 891 A1. Hoya sells such spectacle lenses under the trademark MyoSmart. The spectacle lenses are known as MSMD (multi segment myopic defocus) lenses. The respective technical concept is known as D.I.M.S. (Defocus Incorporated Multiple Segments) technology. Details are, for example, disclosed under https://www.hoyavision.com/en-hk/discover-products/for-spectacle-wearers/special-lenses/myosmart/.

Respective spectacle lenses are disclosed in US 2017 / 0 131 567 A1. The spectacle lenses comprise a central zone providing full correction and a plurality of microlenses/lenslets surrounding the central zone and providing an additional power of e. g. approximately 3.5 D. A similar approach is used in Essilor's Stellest spectacle lenses being described in detail in EP 3 553 594 A1, EP 3 561 578 A1, WO 2019/ 166 653 A1, WO 2019/ 166 654 A1, WO 2019/166 655 A1, WO 2019/166 657 A1, WO 2019/166 659 A1 and WO 2019/ 206 569 A1, respectively. The microlenses/lenslets are aspherical and have an optical power in their geometrical center which lies in the range between 2.0 D and 7.0 D in absolute value, and an optical power in their periphery which lies in the range between 1.5 D and 6.0 D in absolute value. The refractive optical power provided by the aspherical microlenses/lenslets exceeds the refractive power of the clear central zone by 0.5 D or more.

Also WO 2020/ 014 613A1 assigned to Sightglass Vision Inc. recently disclosed a myopia control spectacle lens that may contain one or more defocus elements, i.e. a myopia control spectacle lens may contain a clear center, free of said defocus elements treating children having, or suspected of having, myopia by having the children wear spectacles with myopia control lenses provides a safe, efficient, and non-invasive method for reducing the progression of juvenile myopia. Exemplarily, the document refers to regions that comprise island-shaped lenses.

WO 2010/ 075 319 A2 also refers to the importance of peripheral retinal image determining myopic eye growth. The document proposes a therapeutic treatment method for preventing, ameliorating, or reversing eye-length- related disorders, the therapeutic treatment method comprising: identifying, in a patient, an eye-length-related disorder; and inducing artificial blurring of the patient's peripheral vision in order to decrease an average spatial frequency of images input to the retina of the eye past a threshold spatial frequency to inhibit further lengthening of the patient's eye. In particular, the document proposes providing the patient with spectacle lenses having a first area including a plurality of first elements selected from the group consisting of: (i) bumps on a surface of the spectacle lens; (ii) depressions on the surface of the spectacle lens; (iii) first translucent inclusions in a spectacle lens material; and (iv) first transparent inclusions in the spectacle lens material, the first transparent inclusions having a refractive index different from that of the spectacle lens material. The elements in general are point-shaped elements having a non-zero point density in a range between 0 and 8 dots per mm$^2$.

Improvements of this kind of spectacle lenses are disclosed in WO 2018/ 026 697 A1 and WO 2019/152 438 A1, respectively.

In particular, WO 2018/ 026 697 A1 discloses a pair of eyeglasses, comprising: eyeglass frames; and a pair of spectacle lenses mounted in the frames, the spectacle lenses comprising a point pattern distributed across each spectacle lens, the point pattern comprising an array of dots spaced apart by a distance of 1 mm or less, each point having a maximum dimension of 0.3 mm or less. WO 2020/ 113 212 A1 discloses a contrast reduction region comprising scattering centers and/or one or more lenslets for reducing image contrast.

WO 2019/152 438 A1 discloses a spectacle lens, comprising: a lens material having two opposing curved surfaces; and a scattering region surrounding a clear aperture, wherein the scattering region has a plurality of spaced apart scattering centers sized and shaped to scatter incident light, the scattering centers being arranged in a pattern that includes an irregular variation in spacing between adjacent scattering centers and/or an irregular variation in scattering centers size.

WO 2010/ 075 319 A2, WO 2018/ 026 697 A1, WO 2019/ 152 438 A1 and WO 2020/ 014 613A1 describe spectacle lenses with artificial peripheral scattering while WO 2020/ 113 212 A1 and WO 2020/ 180 817 A1 describe spectacle lenses with a contrast reduction region comprising scattering centers and/or one or more lenslets for reducing image contrast. Introducing artificial peripheral scattering is somewhat in contradiction to the findings described in WO 2005/ 055 891 A1 and WO 2007/ 092 853 A2 with respect to annular diffusing lenses, however, the results of respective trials based on SightGlass Vision's DOT spectacle lenses have been disclosed to be promising.

Further related art is known from WO 2016/ 168 746 A1, and US 2019 / 0 235 279 A1. CHENG, X., XU, J., CHEHAB, K., EXFORD, J., BRENNAN, N. Soft contact lenses with positive spherical aberration for myopia control. Optom Vis Sci 2016; 93:353-366 discloses a study wherein the slowing of axial growth of the eye by wearing soft contact lenses with positive spherical aberration was shown. Another study concerning myopia control contact lenses was published in SANKARIDURG, P., BAKARAJU, R. C., NADUVILATH, T., CHEN, X., WENG, R., TILIA, D., XU, P., LI, W., CONRAD, F., SMITH, E. L. III, EHRMANN, K. Myopia control with novel central and peripheral plus contact lenses and extended depth of focus contact lenses: 2 year results from a randomised clinical trial. Ophthalmic Physiol Opt 2019; 39: 294-307. https://doi.org/10.1111/opo.12621.

A study disclosed in TSE, D. Y., TO, C. Graded Competing Regional Myopic and Hyperopic Defocus Produce Summated Emmetropization Set Points in Chick. Invest Ophthalmol Vis Sci. 2011; 52: 8056-8062. DOI:10.1167/iovs.10-5207 provides evidence that adjacent patches of myopic and hyperopic defocus are integrated quantitatively either at the level of the retina, choroid, or sclera, to guide emmetropisatory eye growth. The findings highlight the importance of the spatial properties of defocus in visual scenes in guiding ocular growth.

A conceptual solution to the problem of how to deliver simultaneous myopic defocus in spectacle lenses in a way that will not affect the young patients' acceptance of such lenses was proposed in US 2017 / 0 131 567 A1 as discussed above which is regarded as closest state of the art for the present invention. US 2017 / 0 131 567 A1 suggest applying an array of spherical island-shaped microlenses/lenslets separated from each other to the surface of a spherical lens. The initial concept design appears to have been subsequently modified to include a small area centered on the optical center of the lens and having about two pupil diameters left clear of the lenslets to increase wearer comfort and help with acceptance.

This spectacle lens design was successfully tested in a clinical trial at the Hong Kong Polytechnic University on approximately 80 children with a similar number of controls showing 52 % retardation of progression of myopia and 62 % retardation of axial elongation of the eyeball compared to controls after 24 months follow-up with <15 % drop-out rate (LAM, C. S. Y., TANG, W. C., TSE, D. Y., et al. Defocus Incorporated Multiple Segments (DIMS) spectacle lenses slow myopia progression: a 2-year randomised clinical trial Br J Ophthalmol 2019; 0: 1-6. doi:10.1136/bjophthalmol-2018-313739).

In these lenses, the myopic defocus region exhibits a sharp transition from the base surface. Such sharp transitions between the myopic defocus region and the corrective power regions result in high astigmatism and prism power jumps. Moreover, these lenses might create considerable discomfort and eye strain when viewing objects foveally through the lenslets and is acceptable only for intermittent viewing through the lenslets.

SUMMARY OF THE INVENTION

With respect to the mentioned state of the art it is an objective of the present invention to provide a spectacle lens design and a spectacle lens for at least retarding the progression of myopia with improved comfort and reduced eye strain.

It is a further objective of the present invention to provide a method of manufacturing a spectacle lens which allows producing spectacle lenses for at least retarding the progression of myopia with improved comfort and reduced eye strain.

It is a still further objective of the present invention to make available a method of providing a spectacle lens design for at least retarding the progression of myopia with improved comfort and reduced eye strain.

The above mentioned objectives are achieved by a spectacle lens design as claimed in claim 1, a spectacle lens as claimed in claim 7, a method of manufacturing a spectacle lens as claimed in claim 11, and a method of providing a spectacle lens design as claimed in claim 13. The depending claims contain further developments of the invention.

Throughout this specification the following definitions apply:

Additional power

In the context of the present specification, the term "additional power" applies to a focal power that is added to the focal power of a spectacle lens, where the focal power of a spectacle lens provides, assisted by accommodation, a focused image on the fovea and the additional power, when added to the focal power of a spectacle lens, provides for a myopic defocus. The additional power must not be confused with the addition power of a progressive addition lens.

Adjacent

The term "adjacent" refers to an arrangement of zones, e. g. the clear zone and the focusing zone, that are in contact to each other at least sectionwise.

Approximation

The term "approximation" refers to the process of finding a second function that is similar to a first function in a certain interval. Then, the second function approximates the first function, for example, a sinusoidal curve approximating a circle. Typically, the function to approximate is expanded in a Taylor series up to some degree, higher orders are dropped. This expansion approximates said first function up to said degree.

As-worn position

The as-worn position is the position, including orientation, of the spectacle lenses relative to the eyes and face during wear (DIN ISO 13666:2019, section 3.2.36). The as-worn position is determined by the as-worn pantoscopic angle, the as-worn face form angle and the vertex distance. The as-worn pantoscopic angle is the vertical angle between the horizontal and the perpendicular to a reference line passing through the apex of the grooves of the upper and lower rims of the frame in the vertical plane containing the primary direction (DIN ISO 13666:2019, section 3.2.37), where the primary direction is the direction of the line of sight, usually taken to be the horizontal, to an object at an infinite distance measured with habitual head and body posture when looking straight ahead in unaided vision (DIN ISO 13666:2019, section 3.2.25) and the line of sight is the ray path from the point of interest (i.e. point of fixation) in object space to the centre of the entrance pupil of the eye and its continuation in image space from the centre of the exit pupil to the retinal point of fixation (generally the foveola) (DIN ISO 13666:2019, section 3.2.24). Typical values of the as-worn pantoscopic angle lie in the range between -20 and +30 degree. The as-worn face form angle is the horizontal angle between the primary direction and the perpendicular to a reference line passing through the apex of the grooves of the nasal and temporal rims of the frame in the horizontal plane containing the primary direction (DIN ISO 13666:2019, section 3.2.38). Typical values of the as-worn face form angle lie in the range between -5 and +30 degree. The vertex distance is the horizontal distance between the back surface of the spectacle lens and the apex of the cornea, measured with the eyes in the primary position (DIN ISO 13666:2019, section 3.2.40), where the primary position is the position of the eye when looking in the primary direction (DIN ISO 13666:2019, section 3.2.26). Typical valued of the vertex distance lie in the range between 5 mm and 30 mm. The as-worn position may be an individual as-worn position determined for a specific individual or a generic as-worn position determined for a defined group of wearers.

Back surface

In the context of a spectacle lens or spectacle lens design the term "back surface" is used for a surface of a spectacle lens which when mounted and worn in the spectacle frame faces towards the wearer's eye. In the context of a semi-finished blank, the term "back surface" is used for a surface which will eventually become the back surface of a spectacle lens that is manufactured from the semi-finished blank.

Central zone
In the context of the present invention, a central zone is a zone of a spectacle lens or a spectacle lens design that is surrounded by a surrounding zone the optical properties of which differ from the surrounded central zone.

Circle
The term "circle" refers to a plane geometric figure that is defined as the set of all points of a plane that have a constant distance to a given point, the center, of this plane.

Clear zone
In the context of the present specification, the term "clear zone" applies to a zone of a spectacle lens design or a spectacle lens that provides neither a myopic defocus nor a diffusion in foveal vision when a wearer looks through the clear zone with the spectacle lens being positioned according the specified as-worn position. Furthermore, a clear zone allows for achieving, if necessary assisted by accommodation, a focused image on the fovea. There may be zones of a spectacle lens design or a spectacle lens that do neither provide a myopic defocus nor a diffusion in foveal vision when a wearer looks through the respective zone but show a residual astigmatic error leading to a blurred image. Such a zone is not regarded as a clear zone in the meaning used in the present specification. The clear zone may correspond to a central zone.

Combined function
A combined function is a one-dimensional function resulting from superposing functions for multiple locations $x_i$ or $y_i$.

Continuous function
A function is continuous if arbitrarily small changes in its output can be assured by restricting to sufficiently small changes in its input.

Damping function
A damping function is a function that can be applied to a signal function in order to scale down its amplitude.

Focal power
The term "Focal power" is a collective term for the spherical vertex power, which brings a paraxial pencil of parallel light to a single focus (and which is usually considered in the prescription by the "sphere" value or, abbreviated, "sph", and the cylindrical vertex power of a spectacle lens, which brings a paraxial pencil of parallel light to two separate line foci mutually at right angles (DIN ISO 13666:2019, section 3.10.2) and which is usually considered in the prescription by the "cylinder" value or, abbreviated, "cyl". The "vertex power" is the reciprocal of the paraxial vertex focal length (DIN ISO 13666:2019, section 3.10.7). Within the scope of the present description, a beam is to be considered to be a paraxial pencil of rays if its diameter does not exceed 0.05 mm, in particular 0.01 mm. The prescription values of a spectacle lens can be abbreviated as Rx values or Rx of the lens.

Focusing structures
In the context of the present specification, the term "focusing structures" applies to structures providing a focal power resulting in a myopic defocus when a spectacle lens manufactured according to the spectacle lens design is positioned according to the as-worn position. The focusing structures can be regarded as local maxima and/or minima of a surface sag function describing the surface the focusing structures are located at.

Focusing zone
In the context of the present specification, the term "focusing zone" describes an area that includes focusing structures providing a focal power resulting in a myopic defocus when a spectacle lens manufactured according to the spectacle lens design is positioned according to the as-worn position. The focusing zone is arranged adjacent to the clear zone. For example, the focusing zone can be ring-shaped surrounding the clear zone.

Fovea
The term "fovea" is used in the present description to denominate the fovea centralis, which is a central pit of the retina with densely packed photoreceptor cells.

**Front surface**

In the context of a spectacle lens or spectacle lens design the term "front surface" is used for a surface of a spectacle lens which when mounted and worn in the frame faces away from the wearer's eye. In the context of a semi-finished blank, the term "front surface" is used for a surface which will eventually become the front surface of a spectacle lens that is manufactured from the semi-finished blank.

**Gaussian function**

A Gaussian function is a function of the form

$$f(x) = a \cdot e^{-\frac{(x-b)^2}{2c^2}}$$

for arbitrary real constants a, b and non-zero c. The graph of a Gaussian function is a characteristic symmetric "bell curve" shape. The parameter a is the height of the curve's peak, b is the position of the center of the peak and c (the standard deviation, sometimes called the Gaussian RMS width) controls the width of the "bell".

**Higher-order approximation**

The term "higher-order approximation" refers to an approximation of a function wherein the approximation function is a higher-order polynomial than a quadratic polynomial, e. g. third-order, fourth-order, fifth-order etc. polynomial, or a combination of such higher-order polynomials.

**Infinite support**

A mathematical function may have an infinite support if it is well defined globally and for every coordinate a non-zero function value can be calculated.

**Myopic defocus**

The term "myopic defocus" refers to a situation in which light focusses in front of the fovea by such a distance that a focused image on the fovea cannot be achieved, even when assisted by accommodation. A peripheral myopic defocus is a myopic defocus that is present outside the visual field outside the fovea.

**Pattern function**

A pattern function is a two-dimensional function comprising the combined functions of the horizontal and vertical location, i. e. first and second, coordinates of the locations of the centers of the spheres to be approximated.

**Peripheral zone**

In the context of the present invention, a peripheral zone shall be understood as a zone of a spectacle lens or a spectacle lens design which surrounds a central zone and corresponds to peripheral vision when a wearer of the spectacle lens looks through the central zone.

**Prescription**

The term "prescription" denotes a summary in which the dioptric powers necessary for correcting a diagnosed refractive error are specified in the form of suitable values. In the case of spherical power, the prescription may contain a value "sph" for sphere. In the case of astigmatic power, the prescription can contain values "cyl" for cylinder and "axis" for axis, and, in the case of prismatic power, the prescription can contain prism and base values. Moreover, the prescription may contain further values, for example the "add" value in the case of multifocal spectacle lenses, said "add" value specifying the difference between the vertex power in the near portion of the spectacle lens and in the distance portion of the spectacle lens. A value "PD" for the interpupillary distance may also be contained in the prescription. The prescription values of a spectacle lens can be abbreviated as Rx values or Rx of the lens.

**Representation of a spectacle lens**

In the context of the present invention, the expression "representation of a spectacle lens design" refers to an implementation of a spectacle lens having the respective design features (physical representation of the spectacle lens design) or to a numerical data set describing the design features (numerical representation of the spectacle lens design). For example, such a data set may be stored in a memory of a computer or on a computer-readable (particularly non-transitory) storage medium. In addition, the data set may be retrievable from a data network like, for example, the internet or a local area network (LAN). A dataset resembling a representation of a progressive spectacle lens design may include, in particular, a description of the geometric shape and the medium of the progressive spectacle lens. Such a description can e.g. include a mathematical description of the front surface, the back surface, the arrangement of these surfaces in relation to one another (including the thickness) and the edge delimitation of the progressive spectacle lens as well as the refractive index distribution of the medium of which the progressive lens is to be made. The representation can be in coded or even in encrypted form. The term medium here means the material(s) or the substance(s) the spectacle lens is made of.

The representation of the spectacle lens design may in addition or alternatively include computer-readable instructions for controlling one or more manufacturing machines (e.g. casting, grinding, milling, lapping and/or polishing machines) in order to produce a spectacle lens having the respective design features.

Ring-shaped

A zone shall be considered as ring-shaped if it surrounds another zone and there is a path within the zone which runs from a starting point within the zone around the other zone and to the starting point again.

Sagittal Height

The abbreviation "sag" (or "sagitta") describes the height or depth of a curved surface with respect to a given local plane at a given position. The vector determining the height or depth is a normal vector with regard to the local plane, e. g. a local approximation of a spherical base lens. It may also refer to a measure of the material removed to yield an optical curve.

Second-order approximation

The term "second-order approximation" refers to an approximation of a function wherein the approximation function is a quadratic polynomial.

Semi-finished blank

The term "semi-finished blank" refers to a piece of optical material with one optically finished surface for the making of a spectacle lens (DIN ISO 13666:2019, section 3.8.1).

Signal function

The term "signal function" refers to a function providing the intended functionality. The signal function can be scaled by applying a damping function.

Sinusoidal function

A sinusoidal function is a function which is formed from the sine function by scaling amplitude and frequency as well as phase shift. The term sinusoidal function refers to a function of the of the form

$x \rightarrow \mu + A\sin(mx + \varphi)$ mit $A > 0$, $m \neq 0$

where $\mu$ is the mean value about which the function is oscillating, A is the amplitude of oscillations, m is angular frequency parameter and controls the period of oscillations that is given by $2\pi/m$ and $\varphi$ is a phase parameter that roughly describes the head start of the function relative to a function that starts at its mean value at $x = 0$.

Spectacle lens

A spectacle lens is an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1)

Spectacle lens design

The term optical spectacle lens design is used to denominate the calculated/predetermined or defined optical properties of a spectacle lens, typically for a predetermined specific wearer, taking into consideration a position/arrangement of the spectacle lens relative to a model of an eye of the wearer of the spectacle lens, a position/arrangement of a model of an object to be viewed by the wearer of the spectacle lens for a specific use condition of the spectacle lens as well as a model of the physiological visual properties of the wearer of the spectacle lens.

Particularly, the optical spectacle lens design may comprise a distribution of optical power across an effective area of a spectacle lens as perceived by a predetermined wearer of the spectacle lens for a predetermined as-worn position relative to the wearer's (model) eye and a predetermined object distance model. The calculation of the distribution of the optical power is based on the distance and orientation of the spectacle lens relative to the model eye, the distance and orientation of the spectacle lens relative to the model object as well as physiological parameters of the spectacle wearer such as the wearer's visual deficiencies, namely e.g. the wearer's ametropia, the wearer's ability to accommodate and the wearer's pupillary distance.

The term geometric spectacle lens design means the geometry of the spectacle lens providing the calculated optical properties of a spectacle lens described in the forgoing for the spectacle wearer.

The term target optical spectacle lens design means a draft optical spectacle lens design, the optical properties of which correspond to or are equal to target optical properties.

The term actual optical spectacle lens design means calculated optical properties of a spectacle lens being received as a result of an optimization process/calculation aiming to achieve the target optical spectacle lens design as close as possible. Such an optimization process/calculation in particular for progressive spectacle lenses or customized single vision lenses is e.g. disclosed in Werner Köppen: Konzeption und Entwicklung von Progressivgläsern, in Deutsche Optiker Zeitung DOZ 10/95, S. 42-46.

Such optical or geometric spectacle lens designs may be stored on a computer-readable (e.g. non-transitory and/or electronic and/or optical) data carrier. Moreover, spectacle lenses manufactured according to the spectacle lens design can be considered physical representations of the spectacle lens design.

Essential steps of an example of a method for designing a spectacle lens are outlined in the following:
In a first step, individual user data or application data of the spectacle wearer are recorded. This includes the acquisition of (physiological) data that can be assigned to the spectacle wearer and the acquisition of usage conditions under which the spectacle wearer will wear the spectacles to be designed.

The physiological data of the spectacle wearer may include e.g. the wearer's ametropia and the wearer's ability to accommodate, which are determined by means of a refraction measurement and which are regularly included in a prescription in the form of prescription values for sphere, cylinder, axis, prism and base as well as addition. Furthermore, e.g. the pupillary distance and the pupil size were determined under different lighting conditions. The age of the wearer has an influence on the ability to accommodate and pupil size and may therefore also be taken into consideration. The convergence behavior of the eyes results from the pupillary distance for different viewing directions and object distances.

The conditions of use include the as-worn position of the spectacle lenses in front of the eye (usually in relation to the eye's pivot point) and the object distances for different viewing directions under which the spectacle wearer should see clearly. The seat of the spectacle lenses in front of the eye can e.g. be determined by recording the corneal vertex distance as well as anterior and lateral inclination. These data are included in an object distance model, for which a ray tracing method can be applied.

In a subsequent step, a draft design for the spectacle lens with a large number of evaluation points is determined on the basis of this recorded data. The draft design includes target optical properties for the spectacle lens at the respective evaluation point. The target properties include e.g. the permissible deviation from the prescribed spherical and astigmatic power, taking into account the addition, distributed over the entire spectacle lens, as specified by the arrangement of the lens in front of the eye and the underlying distance model.

Furthermore, a design of surface geometries for the front and back surfaces as well as a design for a refractive index distribution over the entire spectacle lens are specified. E.g. the front surface can be selected as a spherical surface and the back surface as a varifocal surface. Both surfaces could also initially be selected as spherical surfaces. The choice of surface geometry for the first draft generally only determines the convergence (speed and success) of the optimization method used. It should be assumed, for example, that the front surface is to retain the spherical shape and the back surface is given the shape of a varifocal surface.

In a further step, the course of main rays is determined through the large number of evaluation points. Possibly, a local wavefront can be established for each of the main rays in a vicinity of the respective main ray. According to Werner Köppen: Design and Development of Progressive Lenses, in Deutsche Optiker Zeitung DOZ 10/95, pp. 42-46, the number of evaluation points is usually in the range between 1000 and 1500. EP 2 115 527 B1 suggests a number of over 8000 evaluation points. Although the refractive index is usually dependent on the wavelength, the dispersion is generally not taken into account and the calculation is carried out for a so-called design wavelength. However, it cannot be ruled out that an optimization process takes different design wavelengths into account, e.g. is described in EP 2 383 603 B1.

In a subsequent step, the above optical properties of the spectacle lens at the evaluation points are determined by determining an influence of the spectacle lens on the beam path of the main rays and, if necessary, the local wavefronts in the vicinity of the respective evaluation point.

In a further step, the design of the spectacle lens is evaluated depending on the determined optical properties and the individual user data. The back surface geometry and as the case may be the refractive index distribution of the design of the spectacle lens may be modified by minimizing a target function such as e.g.

$$F = \sum_m P_m \sum_n W_n \left(T_n - A_n\right)^2$$

where $P_m$ represents the weighting at the evaluation point m, $W_n$ the weighting of the optical property n, $T_n$ the target value of the optical property n at the respective evaluation point m and $A_n$ denotes the actual value of the optical property n at the evaluation point m.

In other words, the local surface geometry of the back surface and as the case may be the local refractive index of the spectacle lens in the respective visual beam path are modified by the evaluation points until a termination criterion is met.

Sphere

The term "sphere" refers to a geometrical object in a three-dimensional space. It can be defined as a set of points that are all at the same distance r from a given point in the three-dimensional space. To approximate a sphere either the entire spherical object can be approximated or a circle representing a cut through the center of the sphere can be approximated followed by transferring the obtained approximation into the three-dimensional space.

Spherical power

The term "spherical power" describes the power of a spectacle lens that brings a paraxial pencil of parallel light to a single focus, where a paraxial pencil of parallel light is a pencil of light with a central light ray in which the distance of the light rays contained in the pencil of light from the central ray is small and the angles of the rays of light with respect to the central ray can be approximated according to $\sin\alpha \approx \alpha$.

Surface sag function

The surface sag function is a function describing the sagittal height of a spectacle lens surface.

Zone of a spectacle lens

In the present specification, the term "zone" is used in the context of a spectacle lens or a spectacle lens design to denominate a portion of the spectacle lens or the spectacle lens design which represents an area of the spectacle lens or the spectacle lens design which is smaller than the total area of the spectacle lens or spectacle lens design.

The articles "a", "an", and "the" as used in this specification and the appended claims include plural referents unless expressly and unequivocally limited to one referent.

The term "and/or" as used herein, when used in a series of two or more elements, means that any of the listed elements may be used alone, or any combination of two or more of the listed elements may be used. For example, when describing a second-order and/or higher-order approximation, the approximation may be a second-order approximation alone, a higher-order approximation alone, or a combination of a second-order approximation and a higher-order approximation.

According to a first aspect of the invention, a spectacle lens design for a spectacle lens to be positioned relative to the eye of a wearer according to a given as-worn position is provided. The as-worn position can be an individual as-worn position or a generic as-worn position. The spectacle lens design includes:

- a clear zone which, when a spectacle lens manufactured according to the spectacle lens design is positioned according to the as-worn position, has a focal power that provides a focused image on the fovea and
- a focusing zone arranged adjacent to the clear zone where the focusing zone includes focusing structures at a lens surface providing a focal power resulting in a myopic defocus, when a spectacle lens manufactured according to the spectacle lens design is positioned according to the as-worn position.

The inventive spectacle lens design may be a spectacle lens design for a single vision spectacle lens, in particular for a single vision spectacle lens with a clear zone that is centered on the optical axis of the single vision spectacle lens.

Alternatively, the inventive spectacle lens design may be a spectacle lens design for a progressive spectacle lens with one or a plurality of clear zones extending from the far zone of the lens on or in the vicinity (e. g. distance less than 2 mm) to the near design reference point (acc. to Sec. 3.2.18 of DIN EN ISO 13666:2019) or the near reference point (acc. to Sec. 3.2.21 of DIN EN ISO 13666:2019) or the near optical center (acc. to Sec. 3.16.8 of DIN EN ISO 13666:2019) of the progressive spectacle lens. Preferably, the one or plurality of clear zones extends along the progression, i. e. the one or plurality of clear zones is noncircular.

The clear zone may be a central zone surrounded by the focusing zone. For example, the focusing zone may be ring-shaped and it may surround the clear zone. However, other arrangements are possible.

The clear zone exhibits a first refractive power that is preferably based on a prescription for correcting an abnormal refraction of an eye. The focusing zone provides a myopic defocus due to the focusing structures

The myopic defocus can, in particular, be provided by designing the focusing structures such as to provide a higher focal power than the focal power provided by the clear zone. Preferably, the focusing structures provide an additional power to the focal power of the clear zone so that the focal power of the spectacle lens in the area of the focusing structures exceeds the focal power of the spectacle lens in the area of the clear zone by at least 0.5 D. Typically, the focusing structures provide an additional power in the range from 0.5 D to 5 D. The focusing area may be ring-shaped.

The lens surface of at least the focusing zone is defined by a surface sag function, i. e. the surface sag function defines the lens surface of at least the focusing zone.

According to the invention, the surface sag function is a continuous function. Each of the focusing structures represents a second-order and/or higher-order approximation of a sphere.

The second-order and/or higher-order approximation of the sphere can be limited to one of the orders of the following group: (i) the second-order and/or higher-order approximation of the sphere is limited to the second-order and the third-order, (ii) the second-order and/or higher-order approximation of the sphere is limited to the second-order and the fourth-order, (iii) the second-order and/or higher-order approximation of the sphere is limited to the second-order and the fifth-order, (iv) the second-order and/or higher-order approximation of the sphere is limited to the second-order and the sixth-order. The higher the order of the approximation, the more accurate is the approximation. The lower the order of the approximation, the less computational effort is required for the approximation.

The continuous function can be a function with infinite support, i. e. the function is globally defined and for every coordinate a non-zero function value can be calculated. This means that the surface sag function does not define a plurality of individual island shaped focusing structures.

One idea of the present invention is to replace the plurality of individual spherical shaped microlenses / lenslets described in US 2017 /0 131 567 A1 as focusing structures. The suggested approach is to define a continuous surface sag function that can give a myopic defocus which smoothly blends with the usable corrective power region rather than changing the power discretely along the lens surface in the focusing zone. Therefore, the spherical structures are approximated by a second-order and/or higher-order approximation.

The invention is not restricted to a special shape of the focusing zone or a specific arrangement of the focusing structures, i. e. the focusing zone may exhibit an arbitrary shape. In a specific development, the focusing structures are not arranged in one or a plurality of annular rings.

In a further specific development, the lens surface is completely defined by a single surface sag function, i. e. the lens surface together with the clear zone and the focusing zone exhibiting the focusing structures are defined over the entire surface. This may enable a simplified manufacturing of a spectacle lens from the spectacle lens design as the whole surface is defined by a single function that can be used for implementation within the manufacturing equipment.

The approximation of the sphere can be based on either a one-dimensional approximation of a circle followed by an extension to the second dimension afterwards or by defining a two-dimensional function from the beginning.

In the first case, at least two one-dimensional approximation functions are needed to approximate a sphere. Thus, either at least two similar one-dimensional approximation functions, e. g. at least two sinusoidal functions, or at least two different one-dimensional approximation functions, e. g. at least one sinusoidal function in combination with at least one other function, e. g. a Gaussian function, as discussed below, can be used. If all approximation functions are similar, e. g. are either sinusoidal or Gaussian functions, the approximation may be easier to realize. In contrast, if different approximation functions are chosen, the approximation may lead to specific features of the focusing structure that might be advantageous for certain applications.

The approximation can be based on a Taylor expansion as follows:

A circle centered at $x = 0$ with radius $r$ is given by

$$f_{Circle}(x) := \sqrt{r^2 - x^2}$$

The Taylor expansion of $f_{Circle}$ at $x = 0$ is given by

$$f_{Circle}(x) \approx r \left[ 1 - \frac{1}{2} \cdot \frac{x^2}{r^2} \right] + O(x^4)$$

The focusing zone may exhibit a surface of high spatial frequency pattern created by modulating the original surface sag function that may correspond to the surface sag function of the clear zone by a periodic function. The parameters of such a periodic function can be used to tune how far the myopic defocus areas, i. e. the focusing structures, to be apart and the amount of the peak myopic defocus to be provided. Such a spectacle lens design minimizes the large astigmatism and power jumps and appears relatively smooth for the lens cosmetic by avoiding sharp transitions between the focusing structures and the corrective power regions.

Hence, the discomfort of wearing myopia reducing spectacle lenses based on the inventive spectacle lens design and the eye strain associated therewith are reduced as compared to myopia reducing spectacle lenses according to the state of the art while the myopia progression controlling functionality is maintained.

In a further development of the suggested spectacle lens design, the second-order and/or higher-order approximation of the sphere may include a sinusoidal function. The Taylor expansion of a squared sinusoidal function $f_{Sinusoidal}$ scaled by $r$ at $x = 0$ is given by

$$f_{Sinusoidal}(x) := sin^2\left(\frac{x}{r}\right) \approx \frac{x^2}{r^2} + O(x^4)$$

Therefore, an approximation of a circle using a sinusoidal function $f_{Sinusoidal}$ can be given by

$$f_{Circle}(x) \approx r\left[1 - \frac{1}{2}\cdot sin^2\left(\frac{x}{r}\right)\right]$$

where x is a location of the focusing zone the circle or sphere, respectively, to be approximated is centered at and r is the radius of the circle or sphere, respectively, to be approximated.

The sinusoidal function is more convenient to apply if multiple focusing structures without any abrupt changes are to be used, especially if the same effect is to be created over the entire focusing zone.

Another suitable second-order and/or higher-order approximation of a sphere may include a Gaussian function $f_{Gaussian}$.

The Taylor expansion of a Gaussian function $f_{Gaussian}$ scaled by $r$ at $x = 0$ is given by

$$f_{Gaussian}(x) := e^{-\left(\frac{x}{r}\right)^2} \approx 1 - \frac{x^2}{r^2} + O(x^4)$$

Therefore, an approximation of a circle using a Gaussian function $f_{Gaussian}$ can be given by

$$f_{Circle}(x) \approx \frac{1}{2}\cdot r\left[1 + e^{-\left(\frac{x}{r}\right)^2}\right]$$

where x is a location of the focusing zone the circle or sphere, respectively, to be approximated is centered at and r is the radius of the circle or sphere, respectively, to be approximated.

The Gaussian function is more convenient to apply if the myopic defocus is needed at a single point.

Both suggested approximations, i. e. by using a sinusoidal function and a Gaussian function, respectively, can be combined, either for different spheres to be approximated or for different directions, for example, a horizontal direction and a vertical direction. Thus, the variable x can, for example, be regarded as the horizontal or vertical location of the center of the sphere which is to be approximated within the focusing zone.

According to a further development of the suggested spectacle lens design, the continuous function can be based on a signal function scaled by a damping function.

In other words, to limit the spherical power to a distinct region a damping function can be applied to the signal function, i. e. the function approximating the circle, e. g. the sinusoidal or Gaussian function mentioned above. Various approaches are possible. An exemplary damping function $f_{Damp}$ is given by

$$f_{Damp}(x) = e^{-\left(\frac{x}{\omega}\right)^m}$$

where m is a multiple of 2.

Moreover, to receive an approximation to a circle at positions $x_i$ on the spectacle lens surface, i. e. the front or back surface of the spectacle lens to be manufactured according to the spectacle lens design, the resulting functions can be superposed additively. The resulting one-dimensional combined function $f_{Combined}$ might be given by

$$f_{Combined}(x) = \sum_{xi} f_{Signal}(x - x_i) \cdot f_{Damp}(x - x_i)$$

for the first coordinates x,..., xi of the location of the centers of the circles or spheres, respectively, to be approximated.
Correspondingly, the combined function $f_{Combined}$ for the second coordinates y,..., yi of the location of the centers of the circles or spheres, respectively, to be approximated might be given by

$$f_{Combined}(y) = \sum_{yi} f_{Signal}(y - y_i) \cdot f_{Damp}(y - y_i)$$

By applying a damping function $f_{Damp}$, the surface sag function can be further improved to yield an even more comfortable spectacle lens with less eye strain. The extension to the second dimension might be done in several ways. In a simple approach, the tensor product of both combined function $f_{Comb}$ can be used to get the modulation pattern function $f_{Pattern}$ for the spectacle lens surface

$$f_{Pattern}(x, y) = f_{Combined}(x) \cdot f_{Combined}(y)$$

Alternatively, a two-dimensional function could be defined from the beginning, i. e. a sphere instead of a circle is approximated from the beginning.
According to another aspect of the invention, a spectacle lens to be positioned relative to the eye of a wearer according to a given as-worn position is provided. The spectacle lens includes:

- a clear zone which, when the spectacle lens is positioned according to the as-worn position, has a focal power that provides a focused image on the fovea, and
- a focusing zone arranged adjacent to the clear zone where the focusing zone includes focusing structures at a lens surface providing a focal power resulting in a myopic defocus when the spectacle lens is positioned according to the as-worn position.

According to the invention, the lens surface is defined by a surface sag function, wherein the surface sag function is a continuous function and each of the focusing structures represents a second-order and/or higher-order approximation of a sphere.
The second-order and/or higher-order approximation of the sphere can be limited to one of the orders of the following group: (i) the second-order and/or higher-order approximation of the sphere is limited to the second-order and the third-order, (ii) the second-order and/or higher-order approximation of the sphere is limited to the second-order and the fourth-order, (iii) the second-order and/or higher-order approximation of the sphere is limited to the second-order and the fifth-order, (iv) the second-order and/or higher-order approximation of the sphere is limited to the second-order and the sixth-order.
The continuous function can be a function with infinite support.
The inventive spectacle lens may be a single vision spectacle lens, in particular a single vision spectacle lens with a clear zone that is centered on the optical axis of the single vision spectacle lens.
Alternatively, the spectacle lens may be a progressive lens with one or a plurality of clear zones extending from the far zone of the lens on or in the vicinity (e. g. distance less than 2 mm) to the near design reference point (acc. to Sec. 3.2.18 of DIN EN ISO 13666:2019) or the near reference point (acc. to Sec. 3.2.21 of DIN EN ISO 13666:2019) or the near optical center (acc. to Sec. 3.16.8 of DIN EN ISO 13666:2019) of the progressive spectacle lens. Preferably, the one or plurality of clear zones extends along the progression, i. e. the one or plurality of clear zones is noncircular.
The second-order and/or higher-order approximation of the sphere may include a sinusoidal function and/or a Gaussian function as described above with respect to the spectacle lens design.
An exemplary sinusoidal function approximating a circle can be given by

$$f_{Circle}(x) \approx r \left[ 1 - \frac{1}{2} \cdot sin^2 \left( \frac{x}{r} \right) \right]$$

where x is a location of the focusing zone the circle or sphere, respectively, to be approximated is centered at and r is the radius of the circle or sphere, respectively, to be approximated.

An exemplary Gaussian function approximating a circle can be given by

$$f_{Circle}(x) \approx \frac{1}{2} \cdot r \left[ 1 + e^{-\left(\frac{x}{r}\right)^2} \right]$$

where x is a location of the focusing zone the circle or sphere, respectively, to be approximated is centered at and r is the radius of the circle or sphere, respectively, to be approximated.

Moreover, the continuous function can be based on a signal function scaled by a damping function as explained above with respect to the spectacle lens design.

Concerning the approximation of a plurality of circles at positions $x_i$ on the spectacle lens surface and the corresponding function of the second coordinates y,..., yi as well as the extension to the second dimension, it is referred to the explanations above concerning the spectacle lens design.

Hence, the invention provides for a myopia reducing spectacle lens whose discomfort of wearing and the eye strain associated therewith are reduced as compared to myopia reducing spectacle lenses according to the state of the art while the myopia progression controlling functionality is maintained.

According to another aspect of the invention, a spectacle lens kit comprising a spectacle lens according to the spectacle lens design described above and instructions including the as-worn position of the spectacle lens is provided.

With the spectacle lens kit, the advantages mentioned above with reference to the spectacle lens design are associated accordingly.

According to another aspect of the invention, a data set comprising at least one kind of the following kinds of data: (i) a numerical representation of the spectacle lens design as described above and (ii) data containing computer-readable instructions for controlling one or more manufacturing machines in order to produce a spectacle lens according to the spectacle lens design as described above.

With the data set, the advantages mentioned above with reference to the spectacle lens design are associated accordingly.

According to another aspect of the invention, a method of manufacturing a spectacle lens to be positioned relative to the eye of a wearer according to a given as-worn position is provided. The method includes:

- forming at least a part of a spectacle lens such as to provide a focal power that forms a focused image on the fovea in the as-worn position; and
- forming a focusing zone of the spectacle lens where the focusing zone includes focusing structures as a lens surface providing a focal power resulting in a myopic defocus in the as-worn position such that the focusing zone is arranged adjacent to a clear zone providing said focal power that forms a focused image on the fovea.

According to the invention, the lens surface is defined by a surface sag function, wherein the surface sag function is a continuous function and each of the focusing structures represents a second-order and/or higher-order approximation of a sphere.

The second-order and/or higher-order approximation of the sphere can be limited to one of the orders of the following group: (i) the second-order and/or higher-order approximation of the sphere is limited to the second-order and the third-order, (ii) the second-order and/or higher-order approximation of the sphere is limited to the second-order and the fourth-order, (iii) the second-order and/or higher-order approximation of the sphere is limited to the second-order and the fifth-order, (iv) the second-order and/or higher-order approximation of the sphere is limited to the second-order and the sixth-order.

The continuous function can be a function with infinite support.

The inventive method may be used for manufacturing a single vision spectacle lens, in particular a single vision spectacle lens with a clear zone that is centered on the optical axis of the single vision spectacle lens.

Alternatively, the inventive method may be used for manufacturing a progressive spectacle lens with one or a plurality of clear zones extending from the far zone of the lens on or in the vicinity (e. g. distance less than 2 mm) to the near design reference point (acc. to Sec. 3.2.18 of DIN EN ISO 13666:2019) or the near reference point (acc. to Sec. 3.2.21 of DIN EN ISO 13666:2019) or the near optical center (acc. to Sec. 3.16.8 of DIN EN ISO 13666:2019) of the progressive spectacle lens. Preferably, the one or plurality of clear zones extends along the progression, i. e. the one or plurality of clear zones is noncircular.

Exemplarily, the manufacturing method can be used for manufacturing a spectacle lens according to a spectacle lens design as described above. Hence, the advantages mentioned above with reference to the spectacle lens design are associated with the manufacturing method accordingly. Specifically, the inventive method allows for manufacturing a myopia reducing spectacle lens with reduced discomfort of wearing and reduced eye strain as compared to myopia reducing spectacle lenses according to the state of the art while the myopia progression controlling functionality is maintained.

In a specific development of the inventive method, the second-order and/or higher-order approximation of the sphere may include a sinusoidal function and/or a Gaussian function.

An exemplary sinusoidal function approximating a circle can be given by

$$f_{Circle}(x) \approx r \left[ 1 - \frac{1}{2} \cdot sin^2 \left( \frac{x}{r} \right) \right]$$

where x is a location of the focusing zone the circle or sphere, respectively, to be approximated is centered at and r is the radius of the circle or sphere, respectively, to be approximated.

An exemplary Gaussian function approximating a circle can be given by

$$f_{Circle}(x) \approx \frac{1}{2} \cdot r \left[ 1 + e^{-\left( \frac{x}{r} \right)^2} \right]$$

where x is a location of the focusing zone the circle or sphere, respectively, to be approximated is centered at and r is the radius of the circle or sphere, respectively, to be approximated.

Moreover, the continuous function can be based on a signal function scaled by a damping function as explained above with respect to the spectacle lens design.

Concerning the approximation of a plurality of circles at positions $x_i$ on the spectacle lens surface and the corresponding function of the second coordinates y,..., yi as well as the extension to the second dimension, it is referred to the explanations above concerning the spectacle lens design.

According to another aspect of the invention, a computer-implemented method of providing a spectacle lens design for at least retarding myopia progression based on measured eye-data is provided. The method includes the steps of:

- determining, based on the measured eye data, a spectacle lens with a focal power that provides a focused image on the fovea when the spectacle lens is positioned according to an as-worn position, and
- determining a focusing zone to be arranged adjacent to a clear zone providing the focal power that provides a focused image on the fovea, where the focusing zone includes focusing structures at a lens surface providing a focal power resulting in a myopic defocus, when the spectacle lens is positioned according to the as-worn position.

According to the inventive method, the lens surface is defined by a surface sag function, wherein the surface sag function is a continuous function and each of the focusing structures represents a second-order and/or higher-order approximation of a sphere.

The second-order and/or higher-order approximation of the sphere can be limited to one of the orders of the following group: (i) the second-order and/or higher-order approximation of the sphere is limited to the second-order and the third-order, (ii) the second-order and/or higher-order approximation of the sphere is limited to the second-order and the fourth-order, (iii) the second-order and/or higher-order approximation of the sphere is limited to the second-order and the fifth-order, (iv) the second-order and/or higher-order approximation of the sphere is limited to the second-order and the sixth-order.

The continuous function can be a function with infinite support.

The spectacle lens design provided by the inventive method may be a spectacle lens design for a single vision spectacle lens, in particular for a single vision spectacle lens with a clear zone that is centered on the optical axis of the single vision spectacle lens.

Alternatively, the spectacle lens design provided by the inventive method may be a spectacle lens design for a progressive lens with one or a plurality of clear zones extending from the far zone of the lens on or in the vicinity (e. g. distance less than 2 mm) to the near design reference point (acc. to Sec. 3.2.18 of DIN EN ISO 13666:2019) or the near reference point (acc. to Sec. 3.2.21 of DIN EN ISO 13666:2019) or the near optical center (acc. to Sec. 3.16.8 of DIN EN ISO 13666:2019) of the progressive spectacle lens. Preferably, the one or plurality of clear zones extends along the progression, i. e. the one or plurality of clear zones is noncircular.

The inventive method of providing a spectacle lens design for at least retarding myopia progression provides a spectacle lens which reduces the discomfort of wearing myopia reducing spectacle lenses and the eye strain associated therewith as compared to myopia reducing spectacle lenses according to the state of the art while the myopia progression controlling functionality is maintained.

In a specific development of the inventive method, the second-order and/or higher-order approximation of the sphere may include a sinusoidal function and/or a Gaussian function.

An exemplary sinusoidal function approximating a circle can be given by

$$f_{Circle}(x) \approx r \left[ 1 - \frac{1}{2} \cdot sin^2 \left( \frac{x}{r} \right) \right]$$

where x is a location of the focusing zone the circle or sphere, respectively, to be approximated is centered at and r is the radius of the circle or sphere, respectively to be approximated.

An exemplary Gaussian function approximating a circle can be given by

$$f_{Circle}(x) \approx \frac{1}{2} \cdot r \left[ 1 + e^{-\left( \frac{x}{r} \right)^2} \right]$$

where x is a location of the focusing zone the circle or sphere, respectively, to be approximated is centered at and r is the radius of the circle or sphere, respectively, to be approximated.

Moreover, the continuous function can be based on a signal function scaled by a damping function as explained above with respect to the spectacle lens design.

Concerning the approximation of a plurality of circles at positions $x_i$ on the spectacle lens surface and the corresponding function of the second coordinates y,..., yi as well as the extension to the second dimension, it is referred to the explanations above concerning the spectacle lens design.

It shall be pointed out here, that the focusing structures can be located either on the front surface or the back surface of the spectacle lens or on both surfaces, i. e. front and back surface, of the spectacle lens.

A part of the area of the surface/surfaces or the complete surface/surfaces comprising the focusing structures may be coated as usual with respective functional coatings such as hard coatings, anti-reflective coatings, clean-coatings, anti-fog-coatings, anti-static coatings, anti-bacterial coatings, antiviral-coatings, etc..

Further features, properties and advantages of the present invention will become clear from the following description of embodiments in conjunction with the accompanying drawings.

BRIEF DESCRIPTION OF THE DRAWINGS

Figure 1     illustrates a first exemplary embodiment of spectacles with spectacle lenses exhibiting a clear zone and a focusing zone.

Figure 2     illustrates a second exemplary embodiment of spectacles with spectacle lenses exhibiting a clear zone and a focusing zone.

Figure 3     shows exemplary approximations of a circle using sinusoidal and Gaussian functions.

Figure 4a     shows an exemplary sinusoidal spectacle lens modulation pattern.

Figure 4b     shows a one-dimensional function corresponding to the sinusoidal modulation pattern shown in figure 4a.

Figure 5a     shows an exemplary Gaussian spectacle lens modulation pattern.

Figure 5b     shows a one-dimensional function corresponding to the Gaussian modulation pattern shown in figure 5a.

Figure 6a     shows a contour plot of mean blur > 0.25 D than the Rx of the lens of an exemplary high spatial frequency pattern with +1.00 D myopic defocus.

Figure 6b     shows the corresponding profile of the mean blur along a vertical cross-section of the spectacle lens.

Figure 6c      shows the contour plot of root mean square blur > 0.25 D than the Rx of the lens of the exemplary high spatial frequency pattern with +1.00 D myopic defocus.

Figure 6d      shows the corresponding profile of the root mean square blur along a vertical cross-section of the spectacle lens.

Figure 7a      shows a contour plot of mean blur > 0.25 D than the Rx of the lens of a second exemplary high spatial frequency pattern with +1.00 D myopic defocus.

Figure 7b      shows the corresponding profile of the mean blur along a vertical cross-section of the spectacle lens.

Figure 7c      shows the contour plot of root mean square blur > 0.25 D than the Rx of the lens of the second exemplary high spatial frequency pattern with +1.00 D myopic defocus.

Figure 7d      shows the corresponding profile of the root mean square blur along a vertical cross-section of the spectacle lens.

Figure 8      shows a flow chart representing an exemplary embodiment for a method of manufacturing a spectacle lens.

## DETAILED DESCRIPTION

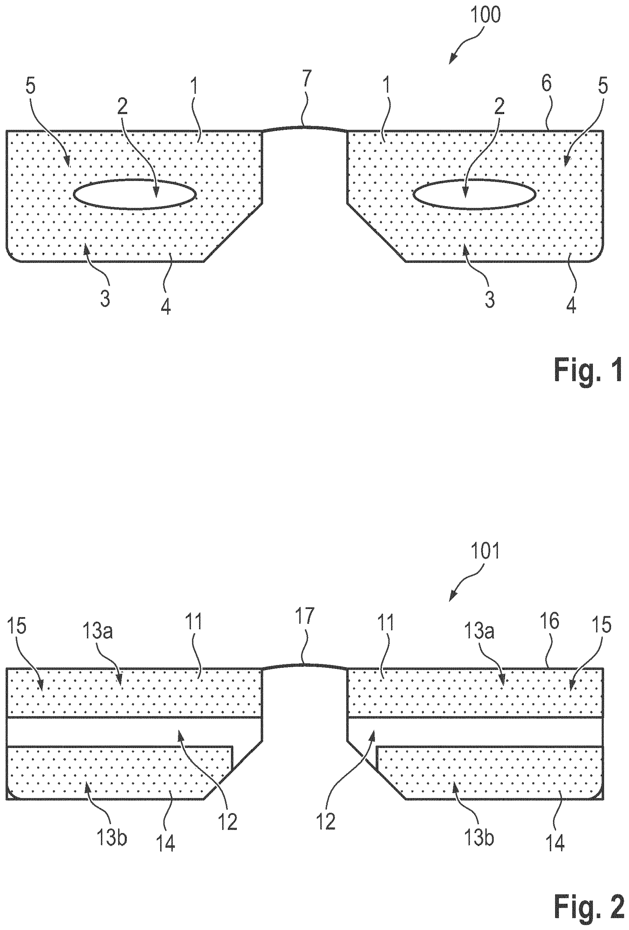

Exemplary embodiments of the inventive spectacle lens design will be described with respect to figures 1 to 7. These figures show examples of spectacle lenses 1 based on various inventive spectacle lens designs. The spectacle lenses 1 of the exemplary embodiments each include a clear zone 2 and a focusing zone 3 with focusing structures 4 where the focusing zone 3 is arranged adjacent to the clear zone 2. However, the locations and the geometries of the clear zone 2 and the focusing zone 3, respectively, described in the exemplary embodiments are not exhaustive. A skilled person will envisage further possible locations and geometries for the clear zone 2 and the focusing zone 3.

A first exemplary embodiment of the inventive spectacle lens design will be described with respect to figure 1 which shows spectacles 100 with spectacle lenses 1 manufactured according to the first exemplary embodiment of the inventive spectacle lens design in a plan view. The spectacle lenses 1 can be regarded as representative for the spectacle lens design of the first exemplary embodiment.

In the present exemplary embodiment, the spectacles 100 comprise two single vision spectacle lenses 1, one for the right eye and one for left eye of the wearer. The two spectacle lenses 1 are mounted in a spectacle frame 6 and are separated by the bridge 7 of the spectacle frame 6. The spectacle lenses 1 may be zero or minus lenses since a myopic wearer is targeted.

Each of the spectacle lenses 1 includes a clear zone 2 for viewing objects. In other words, the clear zone 2 provides for a clear image to the foveal zone of the retina of the wearer's eyes. This clear zone 2 is surrounded by a focusing zone 3 which comprises a plurality of focusing structures 4 at the lens surface 5 and fully surrounds the clear zone 2 so that the clear zone 2 can be seen as an aperture in the focusing zone 3. The focusing zone 3 provides a peripheral myopic defocus to a person looking straight ahead through the clear zone 2. The peripheral myopic defocus is achieved by using a plurality of focusing structures 4 which each add an additional focal power to the focal power of the spectacle lens 1. The additional power is chosen such that a sharp image is formed in front of the fovea of the wearer when the spectacle lenses 1 are used according to their dedicated as-worn position.

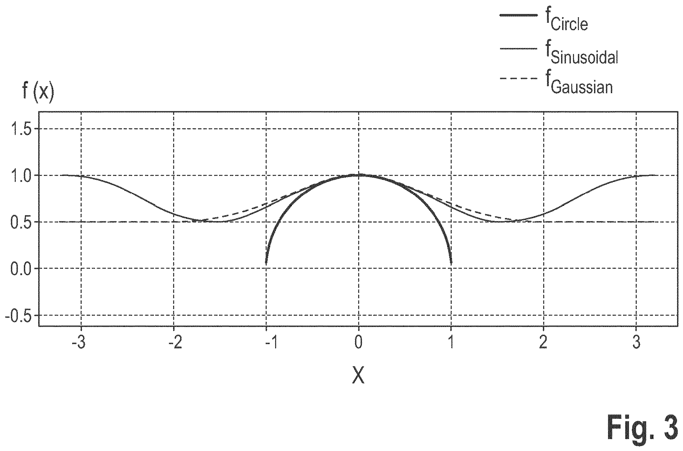

The lens surface 5 of the focusing zone 3 is defined by a surface sag function that describes its height or depth with respect to a given plane, e. g. the surface plane of the clear zone 2, at a given position. In other words, the surface sag function defines the surface shape of the surface 5 comprising the focusing structures 4. The surface sag function is a continuous function with infinite support describing the whole lens surface 5. Each of the focusing structures 4 represents a second-order and/or higher-order approximation of a sphere, i. e. the distinct spherical focusing structures know in the prior art are approximated by a second-order and/or higher-order function. Exemplary approximations are given below with reference to figures 3 to 7.

A second exemplary embodiment of the inventive spectacle lens design will be described with respect to figure 2 which shows spectacles 101 with spectacle lenses 11 manufactured according to the second exemplary embodiment of inventive spectacle lens design in a plan view. The spectacle lenses 11 can be regarded as representative for the spectacle lens design of the second exemplary embodiment.

In the present exemplary embodiment, the spectacles 101 comprise two single vision spectacle lenses 11, one for the right eye and one for left eye of the wearer. The two spectacle lenses 11 are mounted in a spectacle frame 16 and are separated by the bridge 17 of the spectacle frame 16. Due to the myopic wearer, the spectacle lenses 11 are designed to provide full correction according to the wearer's prescription. The spectacle lenses 11 are therefore minus

EP 4 089 473 A1

lenses.

Each of the spectacle lenses 11 includes a clear zone 12 for viewing objects. In other words, the clear zone 12 provides for a clear image to the foveal zone of the retina of the wearer's eyes.

This clear zone 12 extends over the whole width of the spectacle lens 11, i. e. over its whole dimension in vertical direction, and is surrounded in vertical direction by a focusing zone which, in the present exemplary embodiment, consists of two sub-zones zones 13a, 13b which are separated from each other by the clear zone 12.

The sub-zones zones 13a, 13b of the focusing zone are stripe-shaped and provide a peripheral myopic defocus to a person looking straight ahead through the clear zone 12. The peripheral myopic defocus is achieved by using a plurality of focusing structures 14 at the lens surface 15 which each add an additional focal power to the focal power of the spectacle lens 11.

The additional power is chosen such that a sharp image is formed in front of the fovea of the wearer when the spectacle lenses 1 are used according to their dedicated as-worn position.

The lens surface 15 of the focusing zone 13a, 13b is defined by a surface sag function that describes its height or depth with respect to a given plane, e. g. the surface plane of the clear zone 12, at a given position. In other words, the surface sag function defines the surface shape of the surface 15 comprising the focusing structures 14. The surface sag function is a continuous function with infinite support describing the whole lens surface 15 Each of the focusing structures 14 represents a second-order and/or higher-order approximation of a sphere, i. e. the distinct spherical focusing structures know in the prior art are approximated by a second-order and/or higher-order function. Exemplary approximations are given below with reference to figures 3 to 7.

Figure 3 shows local approximations of a circle using a sinusoidal function $f_{Sinusoidal}$ and a Gaussian function $f_{Gaussian}$. The circle to be approximated is centered at x = 0 and defined by $f_{Circle}$.

The circle centered at $x = 0$ with radius $r$ is given by

$$f_{Circle}(x) := \sqrt{r^2 - x^2}$$

The Taylor expansion of $f_{Circle}$ at x = 0 is given by

$$f_{Circle}(x) \approx r \left[ 1 - \frac{1}{2} \cdot \frac{x^2}{r^2} \right] + O(x^4)$$

The circular shape is approximated locally by a continuous function with infinite support, either using a sinusoidal function $f_{Sinusoidal}$ or a Gaussian function $f_{Gaussian}$.

The Taylor expansion of a squared sinusoidal function scaled by $r$ at $x = 0$ is given by

$$f_{Sinusoidal}(x) := sin^2\left(\frac{x}{r}\right) \approx \frac{x^2}{r^2} + O(x^4)$$

Therefore, the approximation of the circle using a sinusoidal function is given by

$$f_{Circle}(x) \approx r \left[ 1 - \frac{1}{2} \cdot sin^2\left(\frac{x}{r}\right) \right]$$

The Taylor expansion of a Gaussian function scaled by $r$ at $x = 0$ is given by

$$f_{Gaussian}(x) := e^{-\left(\frac{x}{r}\right)^2} \approx 1 - \frac{x^2}{r^2} + O(x^4)$$

Therefore, the approximation of the circle using a Gaussian function is given by

$$f_{Circle}(x) \approx \frac{1}{2} \cdot r \left[ 1 + e^{-\left(\frac{x}{r}\right)^2} \right]$$

20

Figure 3 shows the local approximation of the circle given by the above approximations for *r* = 1.

To limit the circular power to a distinct region a damping function $f_{Damp}$ is applied to the signal. The damping function $f_{Damp}$ used in the exemplary embodiment of the invention is given by

$$f_{Damp}(x) = e^{-\left(\frac{x}{\omega}\right)^m}$$

where *m* is a multiple of 2.

To get the surface modulation in one dimension the signal function $f_{Signal}$, i. e. the sinusoidal function $f_{Sinusoidal}$ or the Gaussian function $f_{Gaussian}$, is scaled by the damping function $f_{Damp}$. Moreover, to get an approximation to a circle at positions $x_i$ on the surface of the focusing zone 3, 13a, 13b, the resulting functions are superposed additively. The resulting one-dimensional combined function $f_{Combined}$ might be given by

$$f_{Combined}(x) = \sum_{xi} f_{Signal}(x - x_i) \cdot f_{Damp}(x - x_i)$$

The extension to the second dimension (y-direction) to get the approximation of the spheres is done using the tensor product yielding the modulation pattern function $f_{Pattern}$ on the lens by

$$f_{Pattern}(x, y) = f_{Combined}(x) \cdot f_{Combined}(y)$$

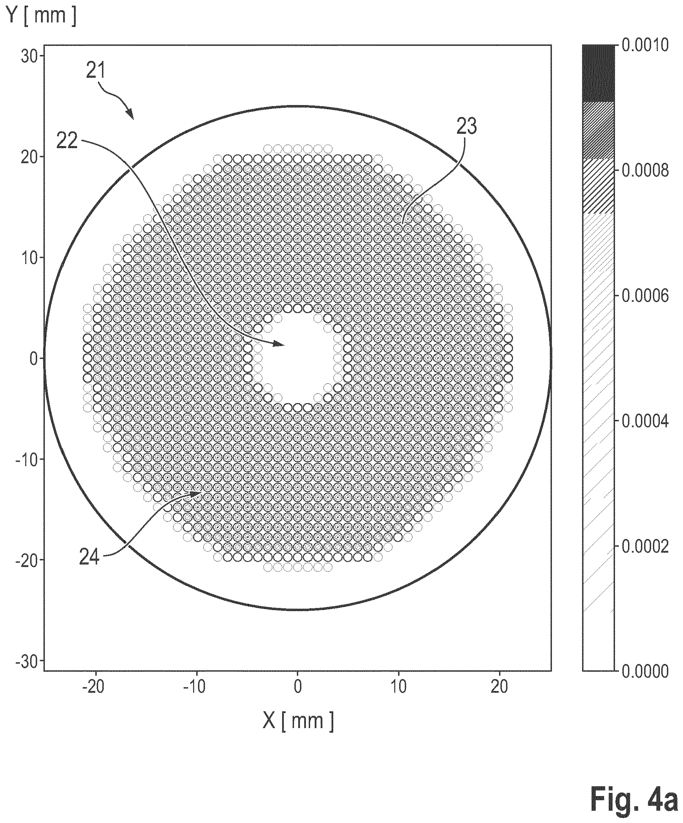

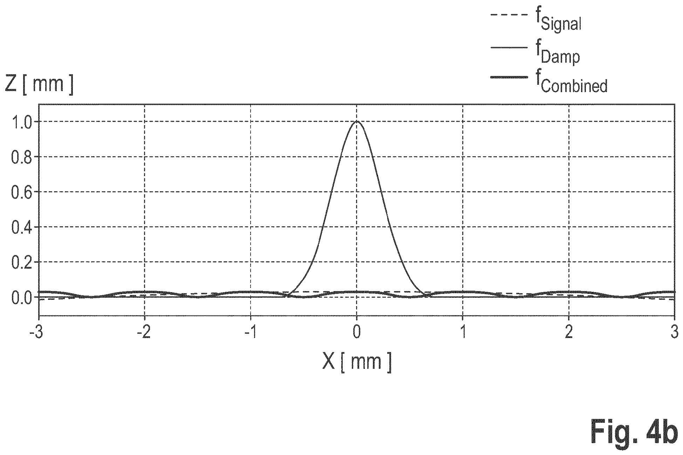

An exemplary sinusoidal spectacle lens modulation pattern is shown in figure 4a. The function representing the sinusoidal pattern from the above section is shifted to represent a modulation height of 1 $\mu$m. The radius r is set to *r* = 100 *mm.* The spherical signal shall be reproduced constantly every $\Delta$ = $x_i$ - $x_{i-1}$ = 1 *mm.* For the damping function $f_{Damp}$, the parameters $\omega = {}^1/_3$ and *m* = 2 are set. The resulting pattern with focusing structures 24 covering the focusing area 23 which surrounds the clear zone 22 of the spectacle lens 21 is depicted in figure 4a, the corresponding one dimensional functions are shown in figure 4b. It is to be noted that the scale on the right side of Fig. 4a as well as the focusing structures 24 shall represent a continuous transition between the different heights. However, due to the regulations concerning graphic representations (black-white drawings only) a continuous scale is not imageable.

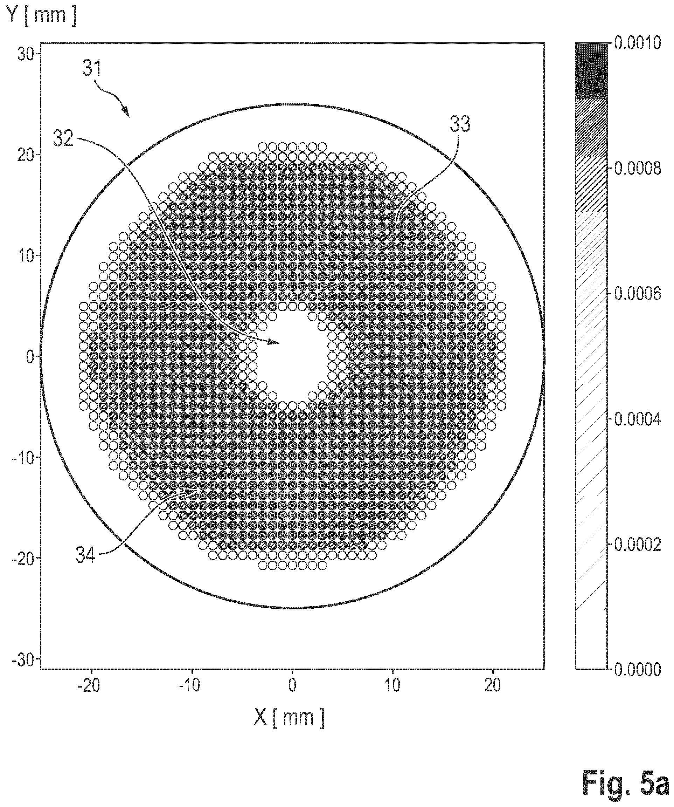

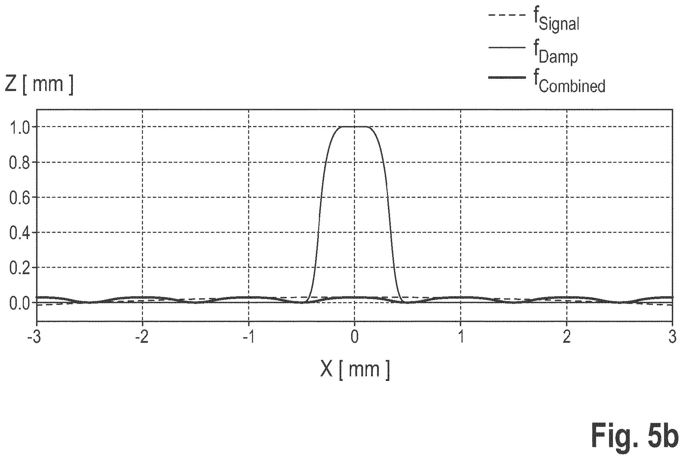

An exemplary Gaussian spectacle lens modulation pattern is shown in figure 5a. The function representing the Gaussian pattern from the above section is shifted to represent a modulation height of 1 $\mu$m. The radius r is set to r = 100 *mm.* The spherical signal shall be reproduced constantly every $\Delta$ = $x_i$ - $x_{i-1}$ = 1 *mm.* For the damping function $f_{Damp}$, the parameters $\omega = {}^1/_3$ and *m* = 6 are set. The resulting pattern with focusing structures 34 covering the focusing area 33 which surrounds the clear zone 32 of the spectacle lens 31 is depicted in figure 5a, the corresponding one dimensional functions are shown in figure 5b. It is to be noted that the scale on the right side of Fig. 5a as well as the focusing structures 34 shall represent a continuous transition between the different heights. However, due to the regulations concerning graphic representations (black-white drawings only) a continuous scale is not imageable.

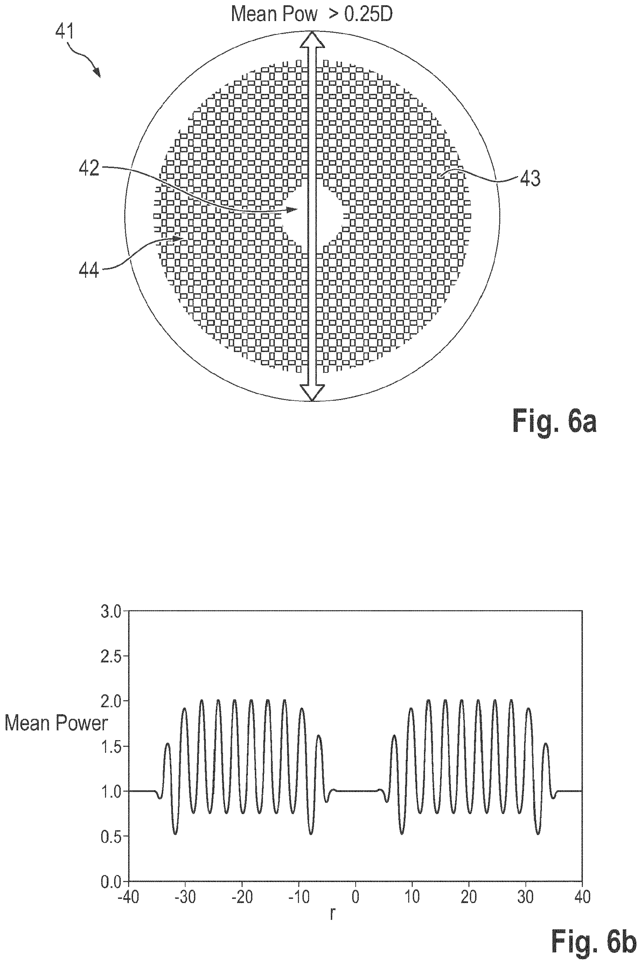

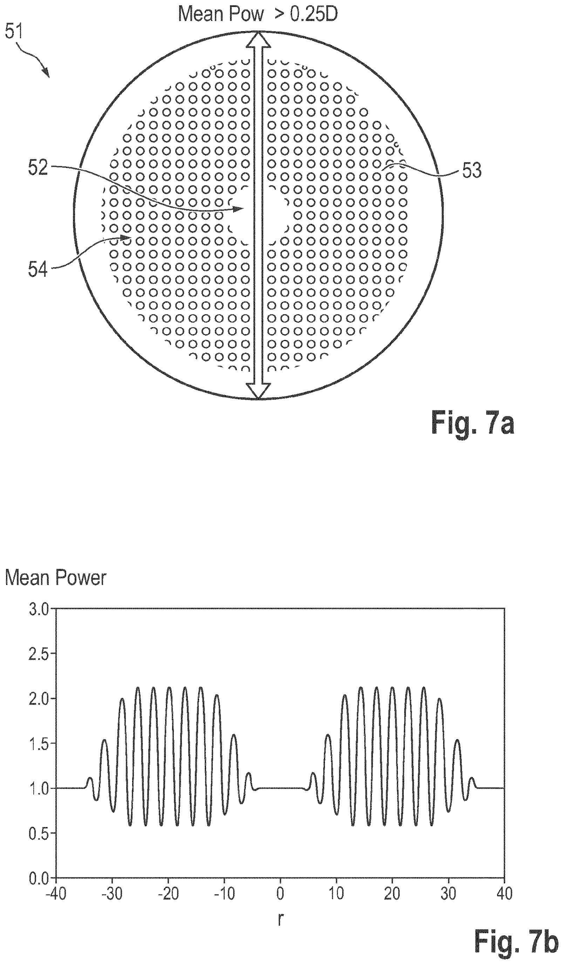

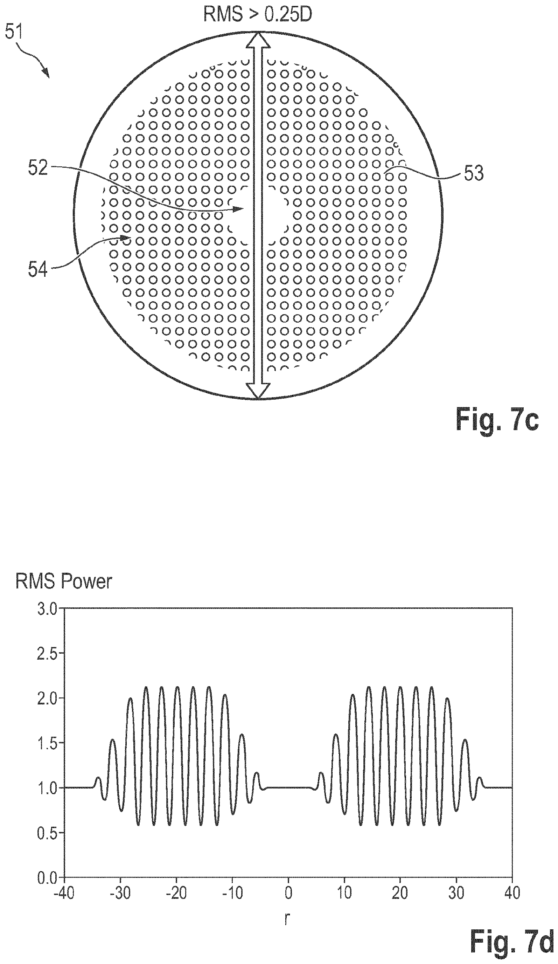

In another exemplary embodiment explained below with reference to figures 6a to 6d and 7a to 7d, the continuous surface sag function is defined as a multiplication of cosine functions of the horizontal and vertical locations (*x* and *y*) of the surface of the focusing zone 43, 53 of the spectacle lens 41, 51 as follows

$$Sag = G \times (Amp \times (cos(2\Pi f x) + A_o) \times (cos(2\Pi f y) + A_o)) \quad Eq.(1)$$

It can be regarded as another example for a sinusoidal function $f_{Sinusoidal}$.

The amplitude *Amp,* the frequency *f* and the offset $A_o$ parameters can be tuned to define a specific amount of myopic defocus and the density of the myopic defocus focusing structures 44, 54. In such a design, a double-sided blending function *G* which acts as a spatial band pass filter to smoothly blend the transitions between the clear zone 42, 52 and the focusing zone 43, 53 can be used.

In the exemplary embodiment, a Super-Gaussian function of $\alpha$th order centered radially at $r_o$ and with width of $\sigma$, as given by

$$G = exp(-\left(\left(\frac{r-r_o}{\sigma}\right)^\alpha\right)) \qquad\qquad Eq.(2)$$

is used as blending function G. The width and the order of the Gaussian function can be tuned to adjust the smoothness of the blending and the area in which the high spatial frequency pattern to be applied.

Figures 6a to 6d and 7a to 7d show two different specific examples of a smooth myopic defocus periodic patterns which are defined by varying the *Amp* and $A_o$ parameters of Eq.(1) and Eq.(2). In both examples, the myopic defocus patterns are superimposed on a 1 D substrate used as a front surface of a spectacle lens 41, 51 whose back surface is optimized for a 1 D Rx in the clear zone 42, 52 of the spectacle lens 41, 51.

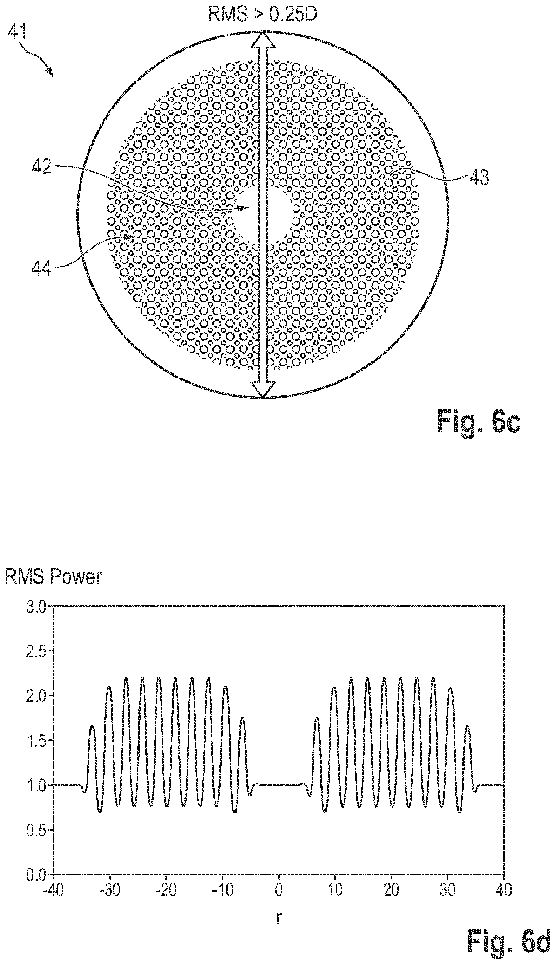

Figures 6a and 6c show contour plots of the mean and RMS defocus of the spectacle lens 41 of a first example which entail a blur greater than 0.25 D more than the Rx of the spectacle lens 41. Figures 6b and 6d show the profiles of these parameters along the vertical cross-sections of the spectacle lens 41.

The high spatial frequency pattern in this example have a +1.00 D myopic defocus defined by setting *Amp* = -0.006 and $A_o$ = 0.25, $f$ = 20, $r_o$ = 20, $\sigma$ = 12.

Figures 7a and 7c show contour plots of the mean and RMS defocus of the spectacle lens 51 of a second example which entail a blur greater than 0.25 D more than the Rx of the spectacle lens 51. Figures 6b and 6d show the profiles of these parameters along the vertical cross-sections of the spectacle lenses 51. The high spatial frequency pattern in this example have a +1.00 D myopic defocus defined by setting *Amp* = 0.0025 and $A_o$ = -0.5, $f$ = 20, $r_o$ = 20, $\sigma$ = 12.

It is to be noted that the focusing structures 44, 54 in figures 6a, 6c, 7a, and 7c shall represent a continuous transition between the different heights. However, due to the regulations concerning graphic representations (black-white drawings only) a continuous transition is not imageable.

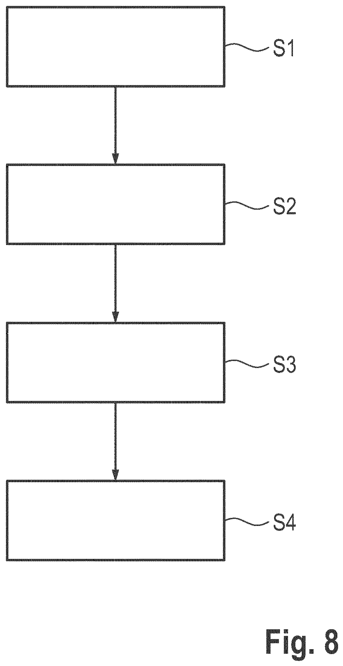

Next, an exemplary embodiment for a method of manufacturing a spectacle lens 1, 11, 21, 31, 41, 51 with an inventive lens design will be described with respect to figure 8.

In a first step, S1, data from a prescription is received where the prescription includes a summary of the dioptric powers necessary for correcting a diagnosed refractive error. In case of a myopic eye, the prescription contains at least a value "sph" for sphere power. In addition, in case of an additional astigmatism, it may also contain values for "cyl" for cylinder power and a value "axis" for the axis of the cylinder. Further values may also present in the prescription like, for example a prism value. As the focusing zone 3, 13a, 13b, 23, 33, 43, 53 shall provide a peripheral myopic defocus, the prescription may also contain a value for an additional power, which shall be used for providing the peripheral myopic defocus.

In the present exemplary embodiment, the values contained in the prescription are based on a measurement performed by an eye care professional with a patient, where the measurement provides for refraction data relating to the eyes of the patient. The refraction data may either be objective refraction data, i.e. refraction data measured objectively by means of a refractometer or the like, or subjective refraction data. In case of subjective refraction data, this data may be collected by letting the patient look at a text or at optotypes with different sizes while trying various test lenses until the patient experiences a satisfying visual acuity.

However, instead of values of a prescription it would also be possible to provide the measured data in form of other suitable values, for example in form of Zernike coefficients. In addition, it would also be possible to receive the values representing objective refraction data directly from a refractometer or from any other suitable measurement apparatus.

Based on the measured data received in step S1, a single vision spectacle lens 1, 11, 21, 31, 41, 51 with a focal power that provides a focused image on the fovea (assisted by accommodation) when the wearer looks through the spectacle lens worn according to an as-worn position is produced by means of a suitable process in step S2. Suitable processes can, for example be molding processes or a machining process. If a machining process is used, the single spectacle lens 1, 11, 21, 31, 41, 51 can, for example, be manufactured from a semi-finished blank, which includes an already finished front surface. The back surface of the semi-finished blank is then machined so that the semi-finished blank becomes the single vision spectacle lens with the requested focal power.

In step S3, a surface sag function is provided which defines the surface 5, 15 of a focusing zone 3, 13a, 13b, 23, 33, 43, 53. The focusing zone 3, 13a, 13b, 23, 33, 43, 53 includes focusing structures 4, 14, 24, 34, 44, 54 providing a focal power resulting in a myopic defocus in the as-worn position. The surface sag function can, for example, be provided as described above with respect to figures 3 to 7.

In step S4, the surface 5, 15 of the focusing zone 3, 13a, 13b, 23, 33, 43, 53 including the focusing structures 4, 14, 24, 34, 44, 54 is formed. This can be done by setting a mold on the front or back surface of the spectacle lens 1, 11, 21, 31, 41, 51 where the molding surface of the mold represents the negative shape of the focusing structures 4, 14, 24, 34, 44, 54 to be manufactured. With the mold set on the front surface of the spectacle lens 1, 11, 21, 31, 41, 51 the focusing structures 4, 14, 24, 34, 44, 54 are formed on the front surface by injection molding or any other suitable molding process. With the mold set on the back surface of the spectacle lens 1, 11, 21, 31, 41, 51 the focusing structures 4, 14, 24, 34, 44, 54 are formed on the back surface by injection molding or any other suitable molding process. After the molding process a polishing process for removing any ridges remaining from the molding process may follow. However, applying the focusing structures 4, 14, 24, 34, 44, 54 to a surface of the spectacle lens 1, 11, 21, 31, 41, 51 does not need to be done by means of a molding process. Other processes such as, for example swelling processes like oleic acid swelling or additive manufacturing processes like inkjet printing may also be used. Although in the present exemplary embodiment the focusing structures 4, 14, 24, 34, 44, 54 are formed on the back surface they may as well be formed on the front surface of the spectacle lens 1, 11, 21, 31, 41, 51.

The focusing zone 3, 13a, 13b, 23, 33, 43, 53 is formed such into the single vision spectacle lens 1, 11, 21, 31, 41, 51 that the focusing zone 3, 13a, 13b, 23, 33, 43, 53 is arranged adjacent to a zone without focusing structures 4, 14, 24, 34, 44, 54. Hence, the zone without focusing structures 4, 14, 24, 34, 44, 54 allows for clear vision with the focal power that provides a focused image on the fovea and forms the clear zone 2, 12, 22, 32, 42, 52. In other words, shape and size of the clear zone 2, 12, 22, 32, 42, 52 are defined by the focusing zone 3, 13a, 13b, 23, 33, 43, 53, in some cases in conjunction with the rim of the spectacle lens 1, 11, 21, 31, 41, 51.

After the forming the surface 5, 15 of the focusing zone 3, 13a, 13b, 23, 33, 43, 53 in step S4, i. e. after providing the focusing structures 4, 14, 24, 34, 44, 54 the spectacle lens 1, 11, 21, 31, 41, 51 is finished.

The concepts of the present invention have been described with respect to exemplary embodiments thereof for illustrating the invention. However, a person skilled in the art realizes that the concepts of the present invention can be implemented by variants of the exemplary embodiments. For example, number and shape of the focusing structures 4, 14, 24, 34, 44, 54 may differ from those described in the exemplary embodiments. Moreover, a person skilled in the art can envisage other manufacturing techniques for providing the focusing structures 4, 14, 24, 34, 44, 54.

List of reference numerals

| | |
|---|---|
| 1, 11, 21, 31, 41, 51 | spectacle lens |
| 2, 12, 22, 32, 42, 52 | clear zone |
| 3, 13a, 13b, 23, 33, 43, 53 | focusing zone |
| 4, 14, 24, 34, 44, 54 | focusing structure |
| 5, 15 | lens surface |
| 6, 16 | spectacle frame |
| 7, 17 | bridge |

| | |
|---|---|
| 100, 101 | spectacles |

| | |
|---|---|
| $A_0$ | offset |
| Amp | amplitude |
| f | frequency |
| $f_{Combined}$ | combined function |
| $f_{Damp}$ | damping function |
| $f_{Gaussian}$ | Gaussian function |
| $f_{Pattern}$ | pattern function |
| $f_{Signal}$ | signal function |
| $f_{sinusoidal}$ | sinusoidal function |
| $f_{Circle}$ | function describing a circle |
| G | blending function |

$x, ..., x_i$    location of the center of the sphere to be approximated (first coordinate)

$y, ..., y_i$    location of the center of the sphere to be approximated (second coordinate)

S1 to S4    method steps

**Claims**

1. A spectacle lens design for a spectacle lens (1, 11, 21, 31, 41, 51) to be positioned relative to the eye of a wearer according to a given as-worn position where the spectacle lens design includes

    - a clear zone (2, 12, 22, 32, 42, 52) which, when a spectacle lens (1, 11, 21, 31, 41, 51) manufactured according to the spectacle lens design is positioned according to the as-worn position, has a focal power that provides a focused image on the fovea; and

- a focusing zone (3, 13a, 13b, 23, 33, 43, 53) arranged adjacent to the clear zone (1, 11, 21, 31, 41, 51) where the focusing zone (3, 13a, 13b, 23, 33, 43, 53) includes focusing structures (4, 14, 24, 34, 44, 54) at a lens surface (5, 15) providing a focal power resulting in a myopic defocus, when a spectacle lens (1, 11, 21, 31, 41, 51) manufactured according to the spectacle lens design is positioned according to the as-worn position,

**characterized in that** the lens surface (5, 15) is defined by a surface sag function, wherein the surface sag function is a continuous function and each of the focusing structures (4, 14, 24, 34, 44, 54) represents a second-order and/or higher-order approximation of a sphere.

2. The spectacle lens design according to claim 1, **characterized in that** the second-order and/or higher-order approximation of the sphere is limited to one of the orders of the following group:

   (i) the second-order and/or higher-order approximation of the sphere is limited to the second-order and the third-order,
   (ii) the second-order and/or higher-order approximation of the sphere is limited to the second-order and the fourth-order,
   (iii) the second-order and/or higher-order approximation of the sphere is limited to the second-order and the fifth-order,
   (iv) the second-order and/or higher-order approximation of the sphere is limited to the second-order and the sixth-order.

3. The spectacle lens design according to claim 1 or 2, **characterized in that** the second-order and/or higher-order approximation of the sphere includes a sinusoidal function.

4. The spectacle lens design according to claim 3, **characterized in that** the sinusoidal function is given by

$$f(x) := r \left[ 1 - \frac{1}{2} \cdot sin^2 \left( \frac{x}{r} \right) \right]$$

where x is a location of the focusing zone (3, 13a, 13b, 23, 33, 43, 53) the sphere to be approximated is centered at and r is the radius of the sphere to be approximated.

5. The spectacle lens design according to any of the claims 1 to 4, **characterized in that** the second-order and/or higher-order approximation of the sphere includes a Gaussian function.

6. The spectacle lens design according to claim 5, **characterized in that** the Gaussian function is given by

$$f(x) := \frac{1}{2} \cdot r \left[ 1 + e^{-\left( \frac{x}{r} \right)^2} \right]$$

where x is a location of the focusing zone (3, 13a, 13b, 23, 33, 43, 53) the sphere to be approximated is centered at and r is the radius of the sphere to be approximated.

7. The spectacle lens design according to any of the claims 1 to 6, **characterized in that** the continuous function is a function with infinite support.

8. The spectacle lens design according to any of the claims 1 to 7, **characterized in that** the continuous function is based on a signal function $f_{Signal}$ scaled by a damping function $f_{Damp}$.

9. A spectacle lens (1, 11, 21, 31, 41, 51) to be positioned relative to the eye of a wearer according to a given as-worn position where the spectacle lens (1, 11, 21, 31, 41, 51) includes

   - a clear zone (2, 12, 22, 32, 42, 52) which, when the spectacle lens (1, 11, 21, 31, 41, 51) is positioned according to the as-worn position, has a focal power that provides a focused image on the fovea; and
   - a focusing zone (3, 13a, 13b, 23, 33, 43, 53) arranged adjacent to the clear zone (2, 12, 22, 32, 42, 52) where the focusing zone (3, 13a, 13b, 23, 33, 43, 53) includes focusing structures (4, 14, 24, 34, 44, 54) at a lens surface (5, 15) providing a focal power resulting in a myopic defocus when the spectacle lens (1, 11, 21, 31, 41, 51) is positioned according to the as-worn position,

**characterized in that** the lens surface (5, 15) is defined by a surface sag function, wherein the surface sag function is a continuous function and each of the focusing structures (4, 14, 24, 34, 44, 54) represents a second-order and/or higher-order approximation of a sphere.

10. The spectacle lens (1, 11, 21, 31, 41, 51) according to claim 9, **characterized in that** the second-order and/or higher-order approximation of the sphere includes a sinusoidal function and/or a Gaussian function.

11. A spectacle lens kit comprising a spectacle lens (1, 11, 21, 31, 41, 51) according to the spectacle lens design as claimed in any of the claims 1 to 8 and instructions including the as-worn position of the spectacle lens (1, 11, 21, 31, 41, 51).

12. A data set comprising at least one kind of the following kinds of data:

(i) a numerical representation of the spectacle lens design as claimed in any of the claims 1 to 8 and (ii) data containing computer-readable instructions for controlling one or more manufacturing machines in order to produce a spectacle lens (1, 11, 21, 31, 41, 51) according to the spectacle lens design as claimed in any of the claims 1 to 8.

13. A method of manufacturing a spectacle lens (1, 11, 21, 31, 41, 51) to be positioned relative to the eye of a wearer according to a given as-worn position where the method includes

- forming at least a part of a spectacle lens (1, 11, 21, 31, 41, 51) such as to provide a focal power that forms a focused image on the fovea in the as-worn position; and
- forming a focusing zone (3, 13a, 13b, 23, 33, 43, 53) of the spectacle lens (1, 11, 21, 31, 41, 51) where the focusing zone (3, 13a, 13b, 23, 33, 43, 53) includes focusing structures (4, 14, 24, 34, 44, 54) at a lens surface (5, 15) providing a focal power resulting in a myopic defocus in the as-worn position such that the focusing zone (3, 13a, 13b, 23, 33, 43, 53) is arranged adjacent to a clear zone (2, 12, 22, 32, 42, 52) providing said focal power that forms a focused image on the fovea,

**characterized in that** the lens surface (5, 15) is defined by a surface sag function, wherein the surface sag function is a continuous function and each of the focusing structures (4, 14, 24, 34, 44, 54) represents a second-order and/or higher-order approximation of a sphere.

14. The method according to claim 13, **characterized in that** the second-order and/or higher-order approximation of the sphere includes a sinusoidal function and/or a Gaussian function.

15. A computer-implemented method of providing a spectacle lens design for at least retarding myopia progression based on measured eye-data, including the steps of:

- determining, based on the measured eye data, a spectacle lens (1, 11,21, 31, 41, 51) with a focal power that provides a focused image on the fovea when the spectacle lens (1, 11, 21, 31, 41, 51) is positioned according to an as-worn position; and
- determining a focusing zone (3, 13a, 13b, 23, 33, 43, 53) to be arranged adjacent to a clear zone (2, 12, 22, 32, 42, 52) providing the focal power that provides a focused image on the fovea, where the focusing zone (3, 13a, 13b, 23, 33, 43, 53) includes focusing structures (4, 14, 24, 34, 44, 54) at a lens surface (5, 15) providing a focal power resulting in a myopic defocus, when the spectacle lens is positioned according to the as-worn position,

**characterized in that** the lens surface (5, 15) is defined by a surface sag function, wherein the surface sag function is a continuous function and each of the focusing structures (4, 14, 24, 34, 44, 54) represents a second-order and/or higher-order approximation of a sphere.

Fig. 1

Fig. 2

Fig. 3

Fig. 4a

Fig. 4b

Fig. 5a

Fig. 5b

Mean Pow > 0.25D

41

42

43

44

Fig. 6a

Mean Power

Fig. 6b

RMS > 0.25D

41

42

44

43

## Fig. 6c

RMS Power

r

## Fig. 6d

Mean Pow > 0.25D

51

52

54

53

**Fig. 7a**

Mean Power

**Fig. 7b**

RMS > 0.25D

51

52

53

54

**Fig. 7c**

RMS Power

**Fig. 7d**

Fig. 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/073147 A1 (BAKARAJU RAVI CHANDRA [AU] ET AL) 5 March 2020 (2020-03-05) * figures 3I, 3J, 14A-C * * abstract * * paragraphs [0075], [0223], [0225], [0240] * | 1-15 | INV. G02C7/02 |
| X | WO 2021/059887 A1 (HOYA LENS THAILAND LTD [TH]; QI HUA [JP] ET AL.) 1 April 2021 (2021-04-01) * figure 1 * * abstract * | 1-15 | |
| X | US 2020/326559 A1 (HOSHI YUJI [JP]) 15 October 2020 (2020-10-15) * figures 1,2 * * abstract * | 1-15 | |
| | | | TECHNICAL FIELDS SEARCHED (IPC) |
| | | | G02C |

The present search report has been drawn up for all claims

| Place of search | Date of completion of the search | Examiner |
|---|---|---|
| Munich | 25 October 2021 | Gentile, Mathieu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 17 3073

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2021

| Patent document cited in search report | | Publication date | Patent family member(s) | | Publication date |
|---|---|---|---|---|---|
| US 2020073147 | A1 | 05-03-2020 | AU | 2017351635 A1 | 23-05-2019 |
| | | | CN | 110226118 A | 10-09-2019 |
| | | | EP | 3532891 A1 | 04-09-2019 |
| | | | JP | 2020500328 A | 09-01-2020 |
| | | | KR | 20190076005 A | 01-07-2019 |
| | | | SG | 10202107685Y A | 30-08-2021 |
| | | | SG | 11201903710Q A | 30-05-2019 |
| | | | US | 2020073147 A1 | 05-03-2020 |
| | | | WO | 2018076057 A1 | 03-05-2018 |
| WO 2021059887 | A1 | 01-04-2021 | NONE | | |
| US 2020326559 | A1 | 15-10-2020 | CN | 111512216 A | 07-08-2020 |
| | | | EP | 3730997 A1 | 28-10-2020 |
| | | | JP | WO2019124352 A1 | 25-02-2021 |
| | | | US | 2020326559 A1 | 15-10-2020 |
| | | | WO | 2019124352 A1 | 27-06-2019 |

For more details about this annex : see Official Journal of the European Patent Office, No. 12/82

## REFERENCES CITED IN THE DESCRIPTION

### Patent documents cited in the description

- WO 2007092853 A2
- WO 9966366 A1
- US 20030058407 A1
- WO 2006004440 A2
- WO 2006034652 A1
- WO 2005055891 A1
- WO 2007041796 A1
- WO 2009052570 A1
- WO 2009129528 A1
- WO 2010129465 A1
- US 20160054588 A1
- US 20170276961 A1
- US 20190227342 A1
- US 20170131567 A1
- EP 3553594 A1
- EP 3561578 A1
- WO 2019166653 A1
- WO 2019166654 A1
- WO 2019166655 A1
- WO 2019166657 A1
- WO 2019166659 A1
- WO 2019206569 A1
- WO 2020014613 A1
- WO 2010075319 A2
- WO 2018026697 A1
- WO 2019152438 A1
- WO 2020113212 A1
- WO 2020180817 A1
- WO 2016168746 A1
- US 20190235279 A1
- EP 2115527 B1
- EP 2383603 B1

### Non-patent literature cited in the description

- **JUNG, S. K. ; LEE, J. H. ; KAKIZAKI, H. ; JEE, D.** Prevalence of myopia and its association with body stature and educational level in 19-year-old male conscripts in Seoul, South Korea. *Invest Ophthalmol Vis Sci.,* 15 August 2012, vol. 53 (9), 5579-83
- **HOLDEN, B. A. ; FRICKE, T. R. ; WILSON, D. A. et al.** Global Prevalence of Myopia and High Myopia and Temporal Trends from 2000 through 2050. *Ophthalmology,* 2016, vol. 123, 1036-1042
- **WONG T. Y. ; FERREIRA A. ; HUGHES R. et al.** Epidemiology and disease burden of pathologic myo-pia and myopic choroidal neovascularization: an evidence-based systematic review. *Am J Ophthalmol,* 2014, vol. 157, 9-25
- **PROF. SCHÄFFEL ; PROF. DR. FRANK SCHAEFFEL ; DR. HAKAN KAYMAK.** Individualisierte Myopiebehandlung bei Kindern. *Innovationssymposium 2019,* 19 January 2019
- **CHENG, X. ; XU, J. ; CHEHAB, K. ; EXFORD, J. ; BRENNAN, N.** Soft contact lenses with positive spherical aberration for myopia control. *Optom Vis Sci,* 2016, vol. 93, 353-366
- **SANKARIDURG, P. ; BAKARAJU, R. C. ; NADUVILATH, T. ; CHEN, X. ; WENG, R. ; TILIA, D. ; XU, P. ; LI, W. ; CONRAD, F. ; SMITH, E. L. III.** Myopia control with novel central and peripheral plus contact lenses and extended depth of focus contact lenses: 2 year results from a randomised clinical trial. *Ophthalmic Physiol Opt,* 2019, vol. 39, 294-307, https://doi.org/10.1111/opo.12621
- **TSE, D. Y. ; TO, C.** Graded Competing Regional Myopic and Hyperopic Defocus Produce Summated Emmetropization Set Points in Chick. *Invest Ophthalmol Vis Sci.,* 2011, vol. 52, 8056-8062
- **LAM, C. S. Y. ; TANG, W. C. ; TSE, D. Y. et al.** Defocus Incorporated Multiple Segments (DIMS) spectacle lenses slow myopia progression: a 2-year randomised clinical trial. *Br J Ophthalmol,* 2019, vol. 0, 1-6
- **WERNER KÖPPEN.** Konzeption und Entwicklung von Progressivgläsern. *Deutsche Optiker Zeitung DOZ 10/95,* 42-46
- **WERNER KÖPPEN.** Design and Development of Progressive Lenses. *Deutsche Optiker Zeitung DOZ 10/95,* 42-46